# EUROPEAN PATENT APPLICATION

(11) **EP 2 154 887 A1**
(43) Date of publication of application: **17.02.2010**
(21) Application number: 08777033.5
(22) Date of filing: 30.05.2008
(51) Int. Cl.: H04N 7/173, G06F 13/00, G06F 21/00, G06F 21/24, H04N 7/167

(54) **CONTENT DOWNLOAD SYSTEM, CONTENT DOWNLOAD METHOD, CONTENT SUPPLYING APPARATUS, CONTENT SUPPLYING METHOD, CONTENT RECEIVING APPARATUS, CONTENT RECEIVING METHOD, AND PROGRAM**

(30) Priority: 30.05.2007 JP 2007143881
(71) Applicant: Sony Corporation, Tokyo 108-0075 (JP)
(72) Inventor: KITAZATO, Naohisa, Tokyo (JP)
(74) Representative: Merryweather, Colin Henry
(86) International application number: PCT/JP2008/060022
(87) International publication number: WO 2008/146913

(57) **Abstract**

The present invention relates to a content download system and content download method, content supplying device and content supplying method, content receiving device, content receiving method, and program, whereby a system corresponding to various types of operating modes of content download services can be realized.

Fig. 7 shows a descriptive example of a playing control meta file that is downloaded along with the content. in the playing control meta file 41 is described <content_title>, <drm_server_uri>, <license_id>, <license_type>, <license_description>, <user_confirmation>, <user_messsage>, and <price>. In the case that multiple licenses are set as to a single content, the items <license_id> through <price> are described only the amount of the number of set licenses. The present invention is applicable to a content download service.

## Description

### Technical Field

The present invention relates to a content download system and content download method, content supply device and content supply method, content receiving device and content receiving method, and program, and in particular relates to a content download system and content download method, content supply device and content supply method, content receiving device and content receiving method, and program favorable for use in the case of realizing a content download service that provides a license corresponding to each of various usage methods of the downloaded content.

### Background Art

Along with the increase in high-speed data communication networks of which the Internet is representative, there are already content download services having various contents such as music, videos, computer programs, and so forth as products (for example, see Patent Document 1).

However, the existing content download services are all services for personal computers, and are far from being such that everyone can readily use, such as with a television receiver, for example.

Particularly in the case of a content download service having a video (including corresponding audio and subtitles) as a product, full-scale services are not implemented, with most of these being experimental products, where video content can be viewed as much as desired with a pre-paid fixed fee, the download is executed at an optional timing with a prepaid method, and only the basic operation mode is realized such as a mode to reduce the remaining amount of the prepaid amount each time video contents are downloaded.

Patent Document 1: Japanese Unexamined Patent Application Publication No. 2000-113066

### Disclosure of Invention

### Technical Problem

Also, in the case of full-scale implementation of a content download service wherein video content is a product, not only the basic operating mode described above, but also various operating modes can be expected.

Now, operating modes mean combinations of such as billing timing, download timing, content usage period restrictions, content copy restrictions, and so forth.

The present invention has been made with consideration for such situations, and realizes a system that can correspond to various operating modes of a content download service.

### Technical Solution

A content download system which is a first aspect of the present invention includes: a content supplying device to supply content; and a content receiving device to receiving content from the content supplying device via a network, the content receiving device including operating input means to input user operations, download means to download encrypted content and playing control data necessary for playing the content from the content supplying device, corresponding to the user operations, obtaining means to confirm the existence of a license that includes a key for decrypting the encrypted content based on the playing control data when playing the downloaded content, and to obtain the license corresponding to the confirmation results, and playing means to play the encrypted content using the obtained license, and the content supplying device including control data supplying means to supply the playing control data necessary for playing already-downloaded content in response to a request from the content receiving device, content supplying means to supply the encrypted content in response to a request from the content receiving device, and license supplying means to supply the license including a key for decrypting the encrypted content in response to a request from the content receiving device based on the playing control data, wherein at least one set or more of license information including unique identifying information of license, type information of license, and presenting information to present to the user relating to the license, is described in the playing control data.

A content down method which is a first aspect of the present invention is a content download method for a content download system made up of a content supplying device configured to supply contents, and a content receiving device configured to receive contents from the content supplying device via a network, including the steps of: with the content receiving device, inputting user operations, requesting encrypted content and playing control data necessary for playing the content from the content supplying device, corresponding to the user operations; and with the content supplying device, supplying the encrypted content and the playing control data in response to requests from the content receiving device;_and with the content receiving device, when playing the downloaded content, confirming the existence of a license that includes a key for decrypting the encrypted content based on the playing control data and requesting the license from the content supplying device corresponding to the confirmation results; and with the content supplying device, the license is supplied to the content supplying device in response to the request from the content receiving device based on the playing control data; and with the content receiving device, the encrypted content is played using the obtained license; wherein at least one set or more of license information including unique identifying information of license, type information of license, and presenting information to present to the user relating to the license, is described in the playing control data.

According to the first aspect of the present invention, with the content receiving device, encrypted content and playing control data necessary for playing the content are requested from the content supplying device, corresponding to the user operations, and the encrypted content and the playing control data is supplied in response requests from the content receiving device. Further, with the content receiving device, when playing the downloaded content, the existence of a license that includes a key for decrypting the encrypted content is confirmed based on the playing control data, and the license is requested corresponding to the confirmation results, and the license is supplied to the content supplying device in response to this request. Further, with the content receiving device, the encrypted content is played using the obtained license. Note that at least one set of license information including unique identifying information of license, type information of license, and presenting information to present to the user relating to the license, is described in the playing control data.

A content supplying device which is a second aspect of the present invention is a content supplying device configured to supply contents to a content receiving device connected via a network, including: control data supplying means to supply playing control data necessary for playing the content downloaded by the content receiving device, content supplying means to supply the encrypted content in response requests from the content receiving device, license supplying means to supply the license that includes a key for decrypting the encrypted content in response to the request from the content receiving device based on the playing control data, wherein at least one set or more of license information including unique identifying information of license, type information of license, and presenting information to present to the user relating to the license, is described in the playing control data.

In the license type information may be described at least one of normal playing which indicates that license has a restriction applied to the playable period of the content, additional playing which indicates that the license has an extended playable period after the playable period corresponding to the normal playing has ended, preview playing which indicates that the license is for test viewing/listening, progressive download playing which indicates that the license is such that the content can be played while downloading, and exporting which indicates that the license allows the content to be output and recorded from the content receiving device to an external device.

The license supplying means may supply the additional playing license after the playable period corresponding to the normal playing license has ended, in response to the request from the content receiving device based on the playing control data.

The license supplying means may supply the preview playing license as to the same content only one time, in response to the request from the content receiving device based on the playing control data.

The license supplying means may supply the progressive download playing license only during the content download, in response to the request from the content receiving device based on the playing control data.

At least one set or more of license information including unique identifying information of license, type information of license, approval information indicating whether or not approval will be obtained from the user of the content receiving device at time of obtaining license, and presenting information to present to the user relating to the license, may be described in the playing control data.

A content supplying method which is the second aspect of the present invention is a content supplying method for a content supplying device configured to supply contents to a content receiving device connected via a network including the steps of: supplying playing control data necessary for playing the content downloaded by the content receiving device to the content receiving device, supplying encrypted content in response to the request from the content receiving device, and supplying the license which includes a key for decrypting the encrypted content in response to the request from the content receiving device based on the playing control data, wherein at least one set or more of license information including unique identifying information of license, type information of license, and presenting information to present to the user relating to the license, is described in the playing control data.

A program according to the second aspect of the present invention is a program causing a computer to execute processing for controlling a content supplying device configured to supply contents to a content receiving device connected via a network, including the steps of: supplying playing control data necessary for playing the content downloaded by the content receiving device to the content receiving device, supplying encrypted content in response to the request from the content receiving device, and supplying the license which includes a key for decrypting the encrypted content in response to the request from the content receiving device based on the playing control data, wherein at least one set of license information including unique identifying information of license, type information of license, and presenting information to present to the user relating to the license, is described in the playing control data.

With the second aspect of the present invention, playing control data necessary for playing the content downloaded by the content receiving device is supplied to the content receiving device, and in response to the requests from the content receiving device, the encrypted content is supplied, and in response to request from the content receiving device based on the playing control data, a license including a key for decrypting the encrypted content is supplied. Note that at least one set or more of license information including unique identifying information of license, type information of license, and presenting information to present to the user relating to the license, is described in the playing control data.

A content receiving device according to a third aspect of the present invention is a content receiving device configured to receive contents from a content supplying device connected via a network, including: operating input means configured to input user operations, download means configured to download, from the content supplying device, encrypted content and playing control data necessary for playing the content, corresponding to the user operations, obtaining means configured to confirm the existence of a license that includes a key for decrypting the encrypted content based on the playing control data when playing the downloaded content, and to obtain the license corresponding to the confirmation results, and playing means to play the encrypted content using the obtained license, wherein at least one set or more of license information including unique identifying information of license, type information of license, and presenting information to present to the user relating to the license, is described in the playing control data.

The content receiving device according to the third aspect of the present invention further includes output means configured to output the content wherein encryption has been decrypted by the playing means to the external device, having performed the processing of at least one of encoding method changing processing or re-encrypting processing.

In the license type information is described at least one of normal playing which indicates that license has a restriction applied to the playable period of the content, additional playing which indicates that the license has an extended playable period after the playable period corresponding to the normal playing has ended, preview playing which indicates that the license is for test viewing/listening, progressive download playing which indicates that the license is such that the content can be played while downloading, and exporting which indicates that the license allows the content to be output and recorded from the content receiving device to an external device.

The operating input means may accept the operation of a user who approves obtaining the additional playing license after the playable period corresponding to the normal playing license has ended.

The operating input means may accept the operation of a user who instructs obtaining the additional playing license after the playable period corresponding to the normal playing license has ended.

The operating input means may accept the operation of a user only one time that instructs obtaining the preview playing license as to the same content, in response to requests from the playing means based on the playing control data.

The operating input means may accept the operation of a user that instructs obtaining the progressive download playing license, only during the content download, in response to requests from the playing means based on the playing control data.

At least one set or more of license information including unique identifying information of license, type information of license, approval information indicating whether or not approval will be obtained from the user of the content receiving device at time of obtaining license, and presenting information to present to the user relating to the license, is described in the playing control data, and the content receiving device according to the third aspect of the present invention can further include confirming means to confirm the approval of the user to obtain the license according to the approval information.
In the case that user approval is obtained by the confirming means, the obtaining means can obtain the license, and in the case that user approval is not obtained by the confirming means, the playing means can notify the user that the content cannot be played.

The content receiving method which is the third aspect of the present invention is a content receiving method of a content receiving device configured to receive content from a content supplying device connected via a network, including the steps of: inputting user operations, downloading encrypted content and playing control data necessary for playing the content from the content supplying device, corresponding to the user operations, when playing the downloaded content, confirming the existence of a license that includes a key for decrypting the encrypted content based on the playing control data, and obtaining the license corresponding to the confirmation results, and playing the encrypted content using the obtained license, wherein at least one set or more of license information including unique identifying information of license, type information of license, and presenting information to present to the user relating to the license, is described in the playing control data.

A program which is the third aspect of the present invention causes a computer to execute processing, which program is to control a content receiving device configured to receive content from a content supplying device that is connected via a network, including the steps of: inputting user operations, downloading encrypted content and playing control data necessary for playing the content from the content supplying device, corresponding to the user operations, when playing the downloaded content, confirming the existence of a license that includes a key for decrypting the encrypted content based on the playing control data, and obtaining the license corresponding to the confirmation results; and playing the encrypted content using the obtained license, wherein at least one set or more of license information including unique identifying information of license, type information of license, and presenting information to present to the user relating to the license, is described in the playing control data.

With the third aspect of the present invention, corresponding to the user operations, the encrypted content and the playing control data necessary for playing the content are downloaded from the content supplying device, and when the downloaded content is played, whether or not there are any licenses including a key for decrypting the encrypted content is confirmed, the license is obtained corresponding to the confirmation results, and the encrypted content is played using the obtained license, based on the playing control data. Note that at least one set or more of license information including unique identifying information of license, type information of license, and presenting information to present to the user relating to the license, is described in the playing control data.

### Advantageous Effects

With the first aspect of the present invention, a system that can handle various operating modes for a content download service can be provided.

With the second aspect of the present invention, content can be supplied to a receiving device by handling the various operating modes of the content download service.

With the third aspect of the present invention, content can be downloaded and used for the various operating modes of the content download service.

### Brief Description of Drawings

[Fig. 1] Fig. 1 is a conceptual drawing of a content download system to which the present invention is applied.
[Fig. 2] Fig. 2 is a drawing illustrating the download timing and playing timing of the content.
[Fig. 3] Fig. 3 is a block drawing illustrating a configuration example of the content download system.
[Fig. 4] Fig. 4 is a drawing describing a content playing process.
[Fig. 5] Fig. 5 is a drawing describing a content exporting process.
[Fig. 6] Fig. 6 is a drawing illustrating a description example of a download control meta file.
[Fig. 7] Fig. 7 is a drawing illustrating a description example of a playing control meta file.
[Fig. 8] Fig. 8 is a drawing describing an overview of download processing.
[Fig. 9] Fig. 9 is a timing chart describing the download processing.
[Fig. 10] Fig. 10 is a flowchart describing the download processing by a downloader.
[Fig. 11] Fig. 11 is a drawing describing an overview of playing processing of local content.
[Fig. 12] Fig. 12 is a timing chart describing the playing processing of local content.
[Fig. 13] Fig. 13 is a flowchart describing the playing processing of local content.
[Fig. 14] Fig. 14 is a drawing describing an overview of export processing of local content.
[Fig. 15] Fig. 15 is a timing chart describing the export processing of local content.
[Fig. 16] Fig. 16 is a flowchart describing the export processing of local content.
[Fig. 17] Fig. 17 is a drawing illustrating screen shifting corresponding to an operating mode of a pattern a.
[Fig. 18] Fig. 18 is a drawing illustrating a processing sequence corresponding to the operating mode of a pattern a.
[Fig. 19] Fig. 19 is a drawing illustrating a description example of a download control meta file corresponding to the operating mode of a pattern a.
[Fig. 20] Fig. 20 is a drawing illustrating a description example of a download control meta file corresponding to the operating mode of a pattern a.
[Fig. 21] Fig. 21 is a drawing illustrating screen shifting corresponding to an operating mode of a pattern b.
[Fig. 22] Fig. 22 is a drawing illustrating a processing sequence corresponding to the operating mode of a pattern b.
[Fig. 23] Fig. 23 is a drawing illustrating a description example of a download control meta file corresponding to the operating mode of a pattern b.
[Fig. 24] Fig. 24 is a drawing illustrating a description example of a download control meta file corresponding to the operating mode of a pattern b.
[Fig. 25] Fig. 25 is a drawing illustrating screen shifting corresponding to an operating mode of a pattern c.
[Fig. 26] Fig. 26 is a drawing illustrating a processing sequence corresponding to the operating mode of a pattern c.
[Fig. 27] Fig. 27 is a drawing illustrating a description example of a download control meta file corresponding to the operating mode of a pattern c.
[Fig. 28] Fig. 28 is a drawing illustrating a description example of a download control meta file corresponding to the operating mode of a pattern c.
[Fig. 29] Fig. 29 is a drawing illustrating screen shifting corresponding to an operating mode of a pattern d.
[Fig. 30] Fig. 30 is a drawing illustrating a processing sequence corresponding to the operating mode of a pattern d.
[Fig. 31] Fig. 31 is a drawing illustrating a description example of a download control meta file corresponding to the operating mode of a pattern d.
[Fig. 32] Fig. 32 is a drawing illustrating a description example of a download control meta file corresponding to the operating mode of a pattern d.
[Fig. 33] Fig. 33 is a drawing illustrating screen shifting corresponding to an operating mode of a pattern e.
[Fig. 34] Fig. 34 is a drawing illustrating a processing sequence corresponding to the operating mode of a pattern e.
[Fig. 35] Fig. 35 is a drawing illustrating a description example of a download control meta file corresponding to the operating mode of a pattern e.
[Fig. 36] Fig. 36 is a drawing illustrating a description example of a download control meta file corresponding to the operating mode of a pattern e.
[Fig. 37] Fig. 37 is a drawing illustrating screen shifting corresponding to an operating mode of a pattern f.
[Fig. 38] Fig. 38 is a drawing illustrating a processing sequence corresponding to the operating mode of a pattern f.
[Fig. 39] Fig. 39 is a drawing illustrating a description example of a download control meta file corresponding to the operating mode of a pattern f.
[Fig. 40] Fig. 40 is a drawing illustrating a description example of a download control meta file corresponding to the operating mode of a pattern f.
[Fig. 41] Fig. 41 is a drawing illustrating screen shifting corresponding to an operating mode of a pattern g.
[Fig. 42] Fig. 42 is a drawing illustrating a processing sequence corresponding to the operating mode of a pattern g.
[Fig. 43] Fig. 43 is a drawing illustrating a description example of a download control meta file corresponding to the operating mode of a pattern g.
[Fig. 44] Fig. 44 is a drawing illustrating a description example of a download control meta file corresponding to the operating mode of a pattern g.
[Fig. 45] Fig. 45 is a block drawing illustrating a configuration example of a general-use computer.

### Explanation of Reference Numerals

- 1: content download system
- 2: network
- 10: receiving device
- 20: supplying device
- 11: browser
- 12: download
- 13: storage
- 14: ECG
- 15: AV player
- 16: DRM client
- 17: external output unit
- 21: Web server
- 22: client managing server
- 23: accounting/settlement server
- 24: metadata server
- 25: content server
- 26: DRM server
- 31: download control meta file
- 41: playing control meta file

### Best Mode for Carrying Out the Invention

Specific embodiments to which the present invention is applied will be described in detail below with reference to the drawings.

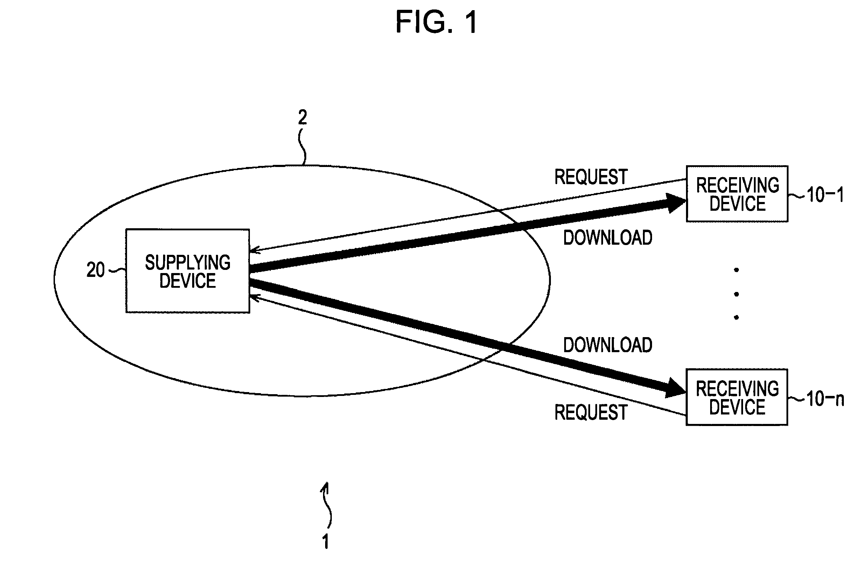

Fig. 1 shows a basic concept of a content download system which is an embodiment of the present invention.

The content download system 1 is made up of a receiving device 10 installed in a home of a user using the content and a supplying device 20 to download content in response to requests from the receiving device 10 that is connected via a network 2.

Note that according to the present embodiment, a download is a process for the receiving device 10 to receive and accumulate electronic data such as content supplied from the supplying device 20 via the network 2. Also, content includes AV data of a video and for playing audio corresponding thereto, and subtitle data and so forth corresponding thereto, which is encrypted with a content key. In order to use the content, a license is required which includes the content key to decrypt the encryption thereof and wherein usage conditions and so forth are described.

The network 2 is a data communication network of which the Internet is representative, and may use a cable such as an optical cable, or a wireless network or broadcast network.

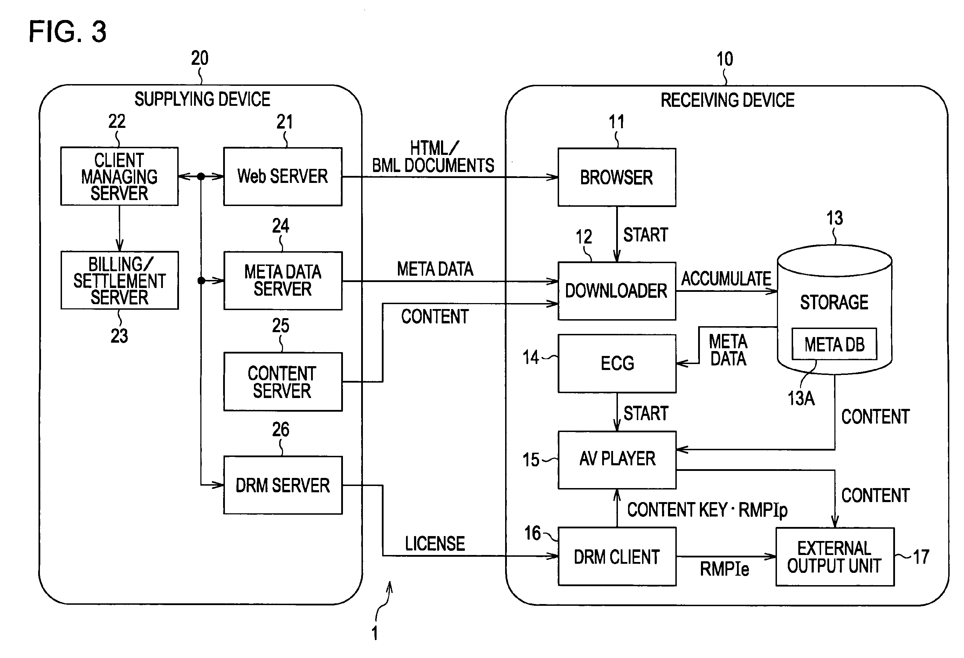

The receiving device 10 is assumed to be built into a television receiver or externally attached to the television receiver, for example. The supplying device 20 is made up of multiple servers and so forth provided on the network 2 (details will be described later with reference to Fig. 3).

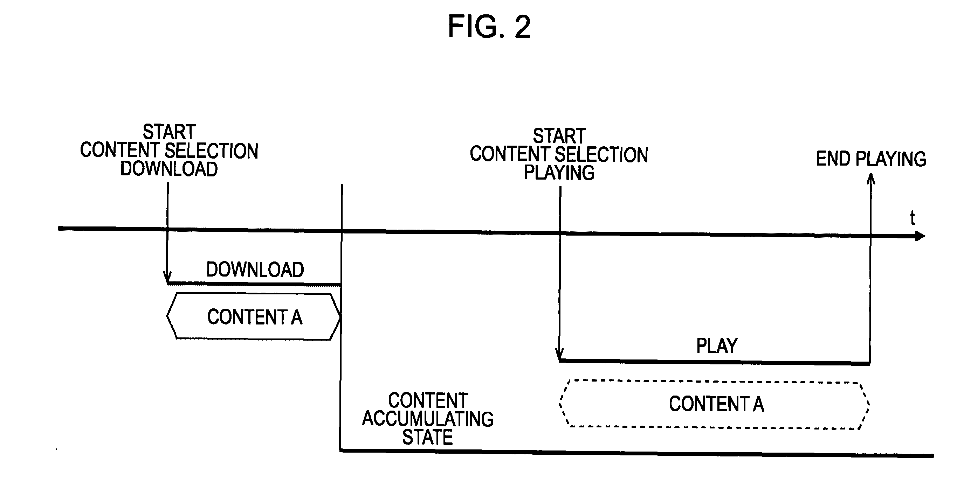

According to the content download system 1, as shown in Fig. 2, the user of the receiving device 10 can download optional content A from the supplying device 20 via the network 2, and subsequently can play the content A accumulated in the receiving device 10 at an optional timing, output the content A to the outside of the receiving device 10, and recording on recording media such as a DVD (digital versatile disc). Hereafter, outputting the downloaded content to the outside of the receiving device 10 and recording onto recording media will be called exporting.

Thus, with the content download system 1 uses (plays or exports) content that has been basically downloaded, whereby the communication speed between the receiving device 10 and supplying device 2 via the network 20 is desirable, but not required, to be a high speed.

Next, a detailed configuration example of the receiving device 10 and supplying device 20 making up the content download system 1 will be described with reference to Fig. 3.

The receiving device 10 is made up of a browser 11 which accesses the supplying device 20, obtains HTML (Hypertext Markup Language) documents or BML (Broadcast Markup Language) documents or the like, and displays corresponding web pages; a downloader 12 which is a help application of the browser 11, and which transfers content and the metadata thereof from the supplying device 20 to accumulate in a storage 13; storage 13 made up of a hard disk drive or the like; an ECG 14 that functions as a user interface of the user to use the content already downloaded; AV player 15 to play the content already downloaded; a DRM (Digital Rights Management) client 16 to obtain a license including the content key necessary for decrypting the content in an encrypted state from the supplying device 20; and an external output unit 17 to output the content played by the AV player 15 to the outside of the receiving device 10.

The browser 11 displays web pages whereby the user can interactively execute content selecting operations such as purchasing and downloading usage contracts and content of the content download service, based on the HTML documents, BML documents, and the like obtained from the supplying device 20.

The downloader 12 is started by control of the browser 11 based on the HTML documents, BML documents, and the like, and transfers the content in an encrypted state and the meta data corresponding thereto from the supplying device 20 and accumulates this in the storage 13.

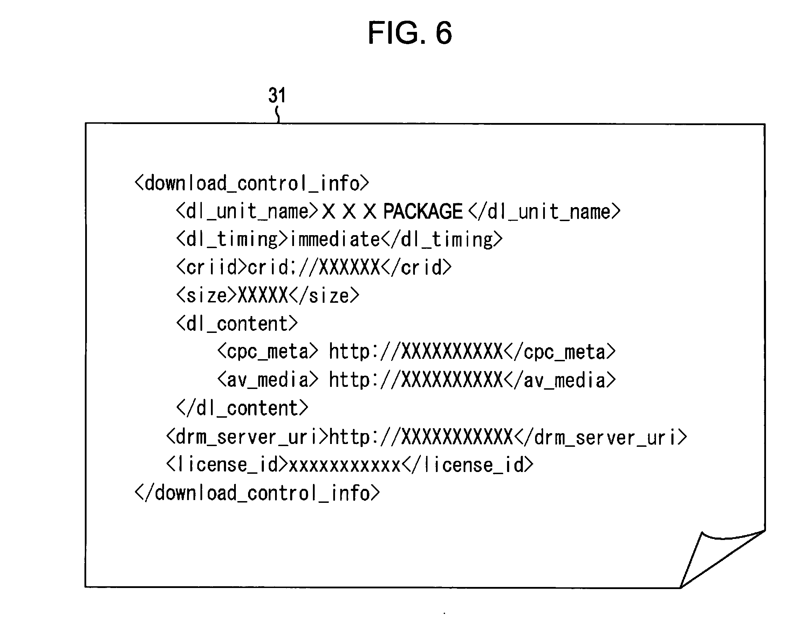

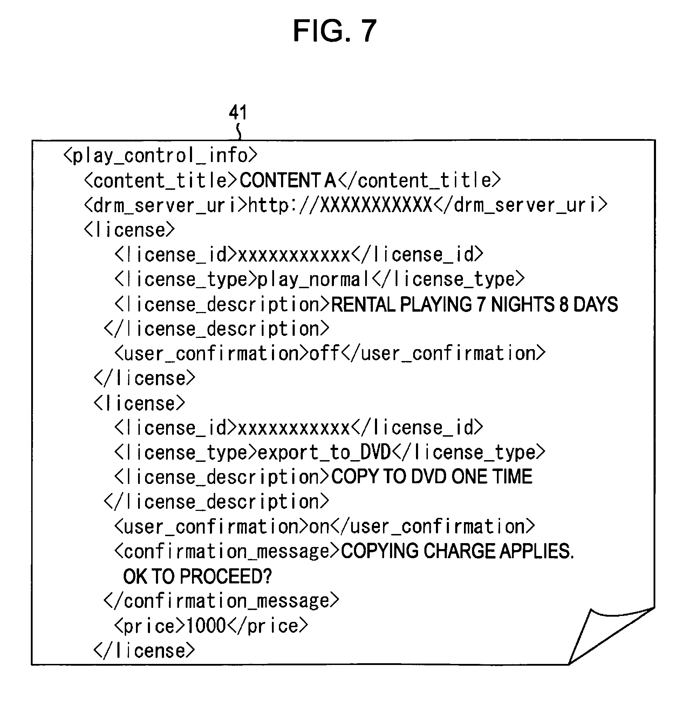

There are two types of metadata, download control meta file 31 (Fig. 6) and a playing control metafile 41 (Fig. 7). The download control meta file 31 has information described therein to transfer the content and license corresponding thereto and the playing control meta file 41 from the supplying device 20. The playing control meta file 41 has information described therein necessary for playing the corresponding content.

Further, the downloader 12 generates a meta DB (database) 13A which is information to present a list of content accumulated in the storage 13 to the user, based on the playing control meta file 41 of the meta data, and accumulates this in the storage 13.

The storage 13 accumulates the content transferred from the supplying device 20 and the meta data thereof. Also, the meta DB 13A generated by the downloader 12 is stored.

The ECG 14 is a resident application, and based on the meta DB 13A stored in the storage 13 provides a list of already-downloaded content to the user, and provides to the user a local content list which is an interactive GUI (Graphical User interface) for a user to select the content to play (view/listen) or export.

The AV player 15 is started by the ECG 14, reads the content to be played from the storage 13, and only when conditions indicated by the RMPIp (playing usage condition information) supplied from the DRM client 16 are satisfied, the content encrypted using the content key supplied from the DRM client 16 is decrypted, and further the encoding is decrypted, whereby the AV data is played, the corresponding video is displayed on the display, and the audio is output from the speaker (none are shown).

Also, the AV player 15 reads the content to be exported from the storage 13, the content encoded using the content key supplied from the DRM client 16 is decrypted, and the encoded data of the decryption results is output to the external output unit 17.

Upon establishing a secure communication path with the DRM server 26 of the supplying device 20, the DRM client 16 obtains a license including a content key from the DRM server 26, and itself holds the obtained license. In response to a request from the AV player 15, the content key is supplied to the AV player 15 only in the case that the usage conditions described in the license are satisfied.

Only when the conditions expressed by the RMPI (export usage condition information) supplied from the DRM client 16, the external output unit 17 converts the encoding method corresponding to the output destination (recording media such as DVD, play device, recording device, etc) of the encoded data from the AV player 15 as appropriate, encrypts this again and outputs to a downstream output destination.

The supplying device 20 is made up of a Web server 21 that supplies HTML documents, BML documents and the like for displaying interactive web pages on the receiving device 10, a client managing server 22 to manage the information relating to the client of the content download service, a billing/settlement server 23 to perform settlement in the event of use of the content download service, a meta data server 24 to transfer the meta data corresponding to the content to the receiving device 10, a content server 25 to transfer the content to the receiving device 10, and a DRM server 26 to supply the license to the receiving device 10.

The Web server 21 supplies HTML documents, BML documents and the like for displaying various types of web pages to the browser 11, in response to requests from the browser 11 of the receiving device 10. The client management server 22 correlates and manages packages (in product units) purchased by the various clients and downloaded content to client information (e.g. client ID, password, settlement information (credit card number, etc), machine ID of the receiving device 10, ID of DRM client 16 (DRM ID) etc) of the client (user of the receiving device 10).

The billing/settlement server 23 performs billing/settlement processing as to the client in response to requests from the client management server 22.

The meta data server 24 manages information relating to the packages (product units of content) and content, and provides the required information to another server, while transferring meta data such as the download control meta file 31 and playing control meta file 41 to the downloader 12, in response to requests from the downloader 12 of the receiving device 10. The content server 25 transfers the content to the downloader 12 in response to requests from the downloader 12 of the receiving device 10.

Upon establishing a secure communication path with the DRM client 16 of the receiving device 10, the DRM server 26 supplies a license including the content key for decrypting the encrypted content to the DRM client 16.

Licenses may include the following types. That is to say, there are true licenses such as a playing license (e.g. the content playing period is 7 nights and 8 days or the like), additional play license (e.g. the playing period is extended by one night), preview (test viewing/listening) license (e.g. the content playing time is limited to 10 minutes), progressive download license (play while downloading the content; unusable after download is complete), exporting license (e.g. content can be copied to a DVD only once), and so forth, and dummy licenses (e.g. the validity period is set to be an extremely short period and the content cannot be actually used). The license supplied to and stored in the DRM client 16 is automatically deleted when the validity period expires.

Note that the Web server 21 through DRM server 26 that make up the supplying device 20 may be disposed so as to be concentrated on the network 2, or may be dispersed and disposed. Also, of the Web server 21 through DRM server 26, several may be combined, or the functions of the Web server 21 through DRM server 26 may be provided on one server.

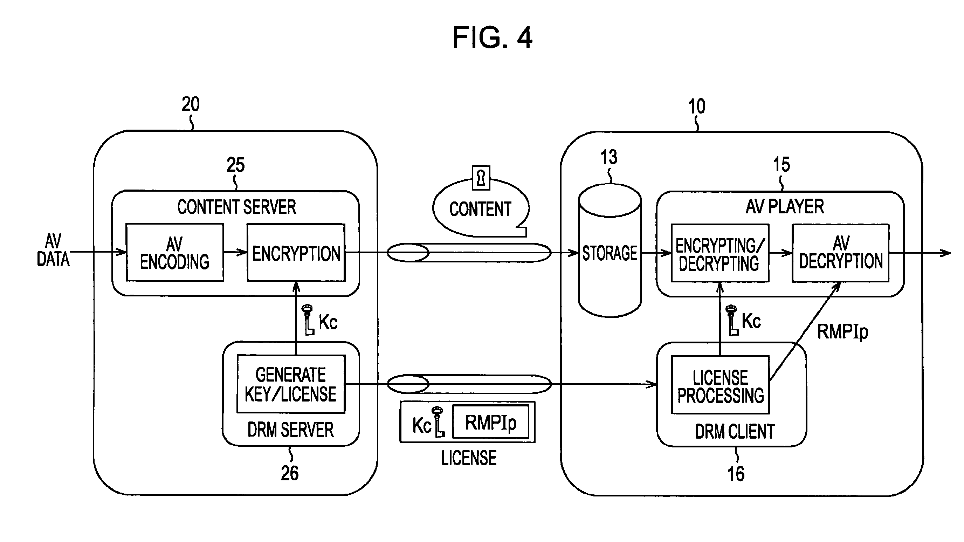

Next, the content that is transferred from the supplying device 20 to the receiving device 10 and played will be described with reference to Fig. 4.

Upon being subjected to compression encoding with a predetermined encoding method (e.g., using MPEG 2) on the content server 25 of the supplying device 20, the AV data making up the content is turned into a transport stream (TS) along with subtitle data and the like, and is transferred to the receiving device 10 in the state of being encrypted in TS packet increments by the content key Kc generated on the DRM server 26, and accumulated in the storage 13.

On the other hand, the content key Kc used when decrypting the content in the encrypted state is supplied from the DRM server 26 of the supplying device 20, separately from the content, to the DRM client 16 of the receiving device 10 in the state of being included in the license along with the RMPIp (playing usage condition information).

The content that is encrypted in TS packet increments accumulated in the storage 13 is subjected to the encryption thereof being decrypted by the AV player 15 with the content key Kc supplied from the DRM client 16, and the MPEG 2TS obtained as a result thereof is decrypted. However, supplying with the content key from the DRM client 16 is limited to the cases wherein the usage conditions (usage period, number of uses, etc) described in the RMPIp is satisfied.

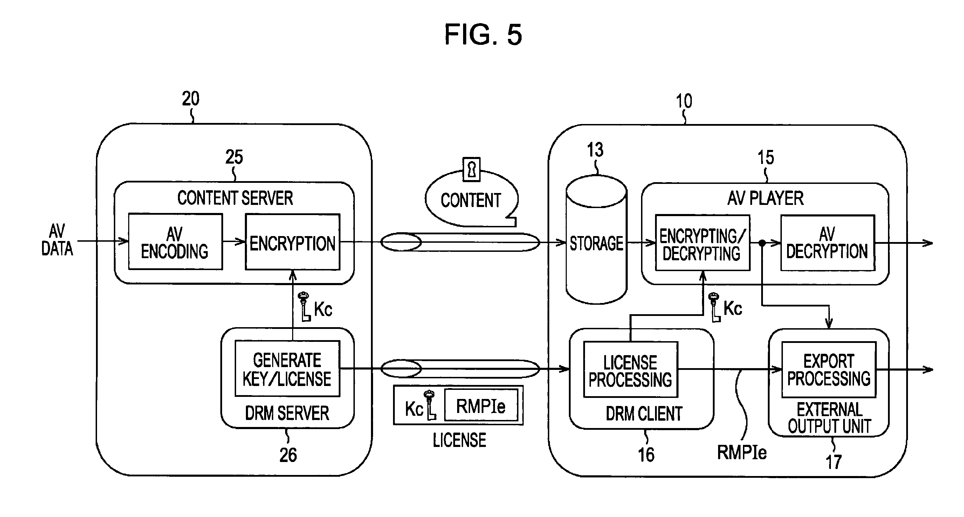

Next, the content that is transferred from the supplying device 20 to the receiving device 10 and exported will be described with reference to Fig. 5.

The content is encrypted and downloaded to the receiving device 10, as described above. On the other hand, the content key Kc used when decrypting the content in this encrypted state is supplied from the DRM server 26 of the supplying device 20, separately from the content, to the DRM client 16 of the receiving device 10 in the state of being included in the license along with the RMPIe (exporting usage condition information).

The content that is encrypted in TS packet increments accumulated in the storage 13 is subjected to the encryption thereof being decrypted by the AV player 15 with the content key Kc supplied from the DRM client 16, and the MPEG 2TS obtained as a result thereof is supplied to the external output unit 17. At the external output unit 17, only in the cases wherein the usage conditions (number of times to copy, output destination, etc) described in the RMPIe are satisfied is the MPEG 2TS converted to the encoding method corresponding to the output destination, and encrypted again and output downstream.

Next, the meta data that the receiving device 10 obtains from the supplying device 20 is described with reference to Fig. 6 and Fig. 7.

Fig. 6 is shows a descriptive example of a download control meta file 31 wherein the content and the license corresponding thereto and information for downloading the playing control meta file 41 is described therein. Note that the download control metafile 31 does not necessarily correspond to one content, and corresponds to a download unit made up of one or more pieces of content.

In the download control meta file 31, the name of the content download unit is described in <dl_unit_name>. The download timing (immediately, a reserved date/time, fixed time> of the content included in the download unit is described in <dl_timing>.

Note that in the case that multiple pieces of content are included in the download units, the items thereafter from <criid> through <av_media> are described only the amount corresponding to the multiple pieces of content.

The content ID included in the download unit is described in <criid>. The content data size is described in <size>. The URI (Uniform Resource Identifier) of the meta data server 24 which is the transfer source of the playing control meta file 41 that information required for playing the content is described is described in <cpc_meta>. The URI of the content server 25 which is the content transfer source is described in <av_media>.

The URI of the DRM server 26 which is the obtaining destination of the license corresponding to the download unit is described in <drm_server_uri>. The license ID corresponding to the download unit is described in <license_id>. Note that there may be cases wherein the license ID described herein is not an ID of a true license (a license that can use the content), but is an ID of a dummy license (e.g., a license that has the validity period set to an extremely short period and that cannot actually use content) (details to be described later).

Note that an arrangement may be made wherein information indicating whether or not a license is obtained corresponding to the download completion is additionally described in the download control meta file 31, so that only in the case that the information shows that the license is to be obtained corresponding to the content download completion, is the license corresponding to the content download completion obtained.

Fig. 7 shows a description example of the playing control meta file 41 wherein information required for playing the content is described. The playing control meta file 41 exists corresponding to each content.

In the playing control meta file 41, the content name is described in <content_title>. The URI of the DRM server 26 which is the obtaining destination of the license corresponding to the content is described in <drm_server_uri>.

Note that in the case that various licenses are set as to a single content, such as a playing license, additional playing license, exporting license, and so forth, the below items of <license_id> through <price> are described only for the number of licenses that are set.

The license ID corresponding to the content is described in <license_id>. Note that the license ID described herein is a true license ID (details to be described later). The type of license (also called license type) is described in <license_type>. Information to be notified to the user relating to usage conditions of the license is described in <license_description>.

Whether or not to confirm with the user in the event of obtaining a license is described by "on" (confirm) and "off" (do not confirm) in <user_confirmation>. A message to confirm with the user in the event of obtaining a license is described in <user_message>. The billing amount generated in the event of obtaining the license, i.e. using the content, is described in <price>. Note that the items <user_message> and <price> are described in the case that <user_confirmation> is "on", i.e. that confirmation is made with the user in the event of obtaining the license.

Note that other than the items described in the display example in Fig. 7, content chapter information, index information for trick play control (mapping information of time and size for each GOP), encoding method information, audio/subtitle switching information and so for can be added to the playing control meta file 41.

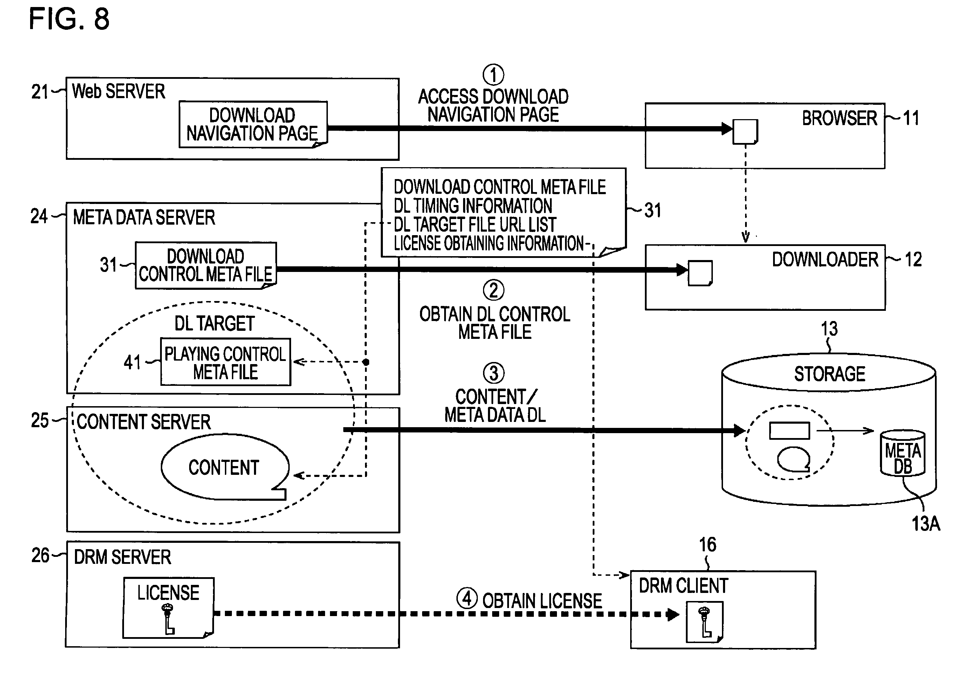

Next, an overview of a series of processing for the receiving device 10 to download content or the like from the supplying device 20 will be described with reference to Fig. 8.

Note that as a premise of the series of processing, let us say that the user of the receiving device 10 has completed registration for service usage on the operator side of the content download service, and thus the client information relating to the user of the receiving device 10 is registered to the client managing server 22 of the supplying device 20, and further information of the purchased package and downloaded content is correlated and managed.

Corresponding to predetermined operations from the user, the browser 11 of the receiving device 10 access the Web server 21 of the supplying device 20, and presents a download navigation page made up of a list of content that can be downloaded and the like to the user. Upon the user performing an operation on the download navigation page to select the content in download units, the downloader 12 is started by the browser 11.

The started downloader 12 obtains the download control meta file 31 corresponding to the selected content download unit from the meta data server 24. Note that the URI of the meta data server 24 which is the obtaining source of the download control meta file 31 obtained herein is described in an HTML document or the like of the download navigation page.

The downloader 12 having obtained the download control meta file 31 transfers the content from the content server 25 and accumulates the playing control meta file 41 from the meta data server 24 in the storage 13, according to the description content of the download control meta file 31. Further, the downloader 12 generates the meta DB 13A for generating the local content list based on the transferred playing control meta file 41, and accumulates this in the storage 13.

Also the downloader 12 requests the DRM client 16 to obtain a license. The DRM client 16 requests and obtains a license from the DRM server 26, according to the description content of the download control meta file 31 obtained by the downloader 12.

This concludes the overview description of the series of processing for downloading content and the like.

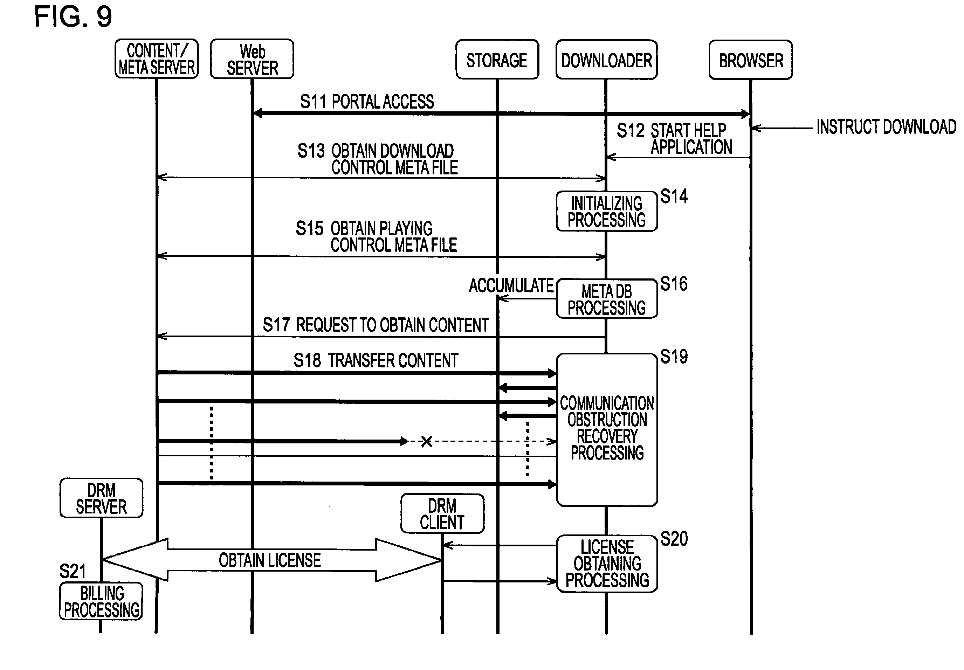

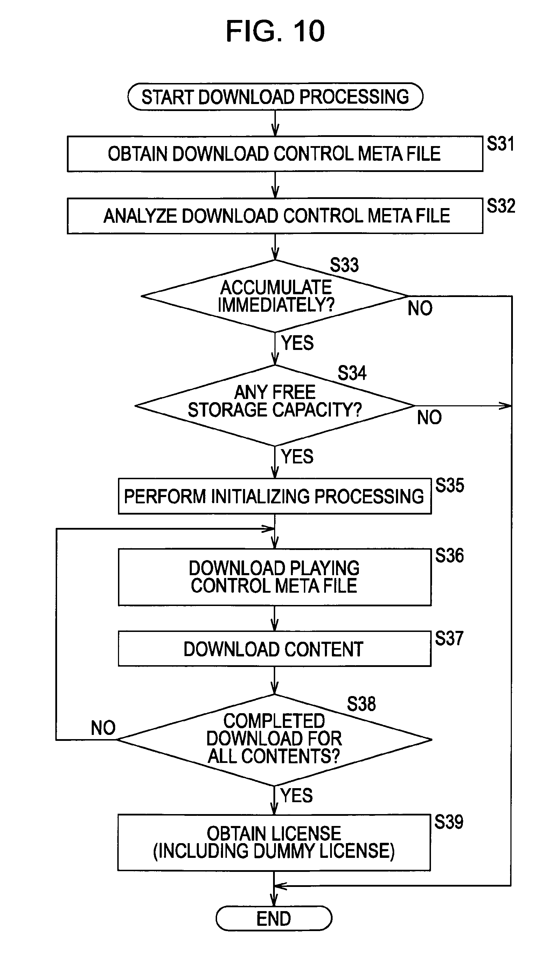

Next, more detailed operations of the series of processing to download content and the like will be described with reference to the timing chart in Fig. 9 and the flowchart in Fig. 10. Note that in Fig. 9 the meta data server 24 and content server 25 are integrated for the purpose of showing in a drawing, and similar cases may occur in other drawings. Of the series of processing to download content and the like, Fig. 10 focuses particularly on the processing of the downloader 12 of the receiving device 10.

The premise for processing is similar to the above-described overview description. First, in step S11, the browser 11 of the receiving device 10 access the Web server 21 of the supplying device 20, and upon executing user authentication, obtains HTML documents and the like for displaying the download navigation page, and presents the download navigation page to the user, based on the obtained HTML documents and the like. Upon the user performing operations to select content in downloading units as to the interactively operable download navigation page, in step S12 the browser 11 starts the downloader 12 which is a help application.

In step S13, the started downloader 12 access the meta data server 24 based on the URI of the meta data server 24 notified from the browser 11, obtains the download control meta file 31 corresponding to the download units of the selected content, and accumulates this in the storage 13 (step S31 in Fig. 10).

In step S14, the downloader 12 executes initialization processing to include processing that analyzes the obtained download control meta file 31, confirms the download timing, confirms the available capacity of the storage 13 upon having comprehended the data size of the content to be downloaded, and generates a directory in the storage 13 (steps S32 through S35 in Fig. 10).

In step S15, the downloader 12 access the meta data server 24 based on the URI of the meta data server 24 described in the download control meta file 31, obtains the playing control meta file 41 to correspond to each piece of all the contents included in the selected download units, and based on the obtained playing control meta file 41, in step S16 the meta DB 13A is generated and accumulated in the storage 13 along with the playing control met file 41 (step S36 in Fig. 10).

In step S17, the downloader 12 access the content server 25 based on the URI of the content server 25 and the content ID described in the download control meta file 31, and requests a transfer of the content included in the selected download increments. Responding to this request, in step S18 the content server 25 starts the transfer of the requested content, and the downloader 12 accumulates the transferred content in the storage 13 (step S37 in Fig. 10).

During this transfer, even in the event that the transfer has been stopped due to a communication interruption, in step S19 the downloader 12 executes processing to restart transfer of the content from the state wherein the transfer is stopped after a communication interruption recovery.

Upon all of the content downloads included in the selected download units finishing, in step S20 the downloader 12 requests the DRM client 16 to obtain a license (steps S38 and S39 in Fig. 10). The DRM client 16 access the DRM server 26 based on the URI of the DRM server 26 and the license ID described in the download control meta file 31, obtains a license after completing authentication processing that includes notification of the DRM ID and so forth, and notifies the downloader 12 that the obtains license will be held within itself and that the license has been obtained. Note that the license obtained here corresponds to the license ID described in the download control meta file 31, and there may be cases wherein this is a true license, and there may be cases wherein this is a dummy license.

On the other hand, the DRM server 26 notifies the client managing server 22 in step S21 that a license has been requested by the DRM client 16. The client managing server 22 executes billing/settlement as to the client as to the billing/settlement server 23, on the grounds that the content download has been completed (however, for example in the case of an operating mode of prepaid fixed amounts, billing/settlement is already completed, whereby billing/settlement would not be executed now).

Also, the client managing server 22 adds information showing the content that has already been downloaded to the client information. The information added here is reflected in the download navigation page that is customized for each client. Accordingly, hereafter, the client can confirm the content that the client itself has already downloaded in the download navigation page. Note that an arrangement may be made wherein information to the effect that the content download is completed and that this has been recognized on the supplying device 20 side is conveyed to the downloader 11, and notification is made to the user of the receiving device 10.

This concludes the detailed description of the operations in the series of processing for downloading content and the like. As described above, the content and a playing control meta file 41 corresponding to each thereof is accumulated in the storage 13 of the receiving device 10 by this processing, and a license corresponding to the content accumulated in the storage (however, there may be cases of a dummy license) is held in the DRM client 16.

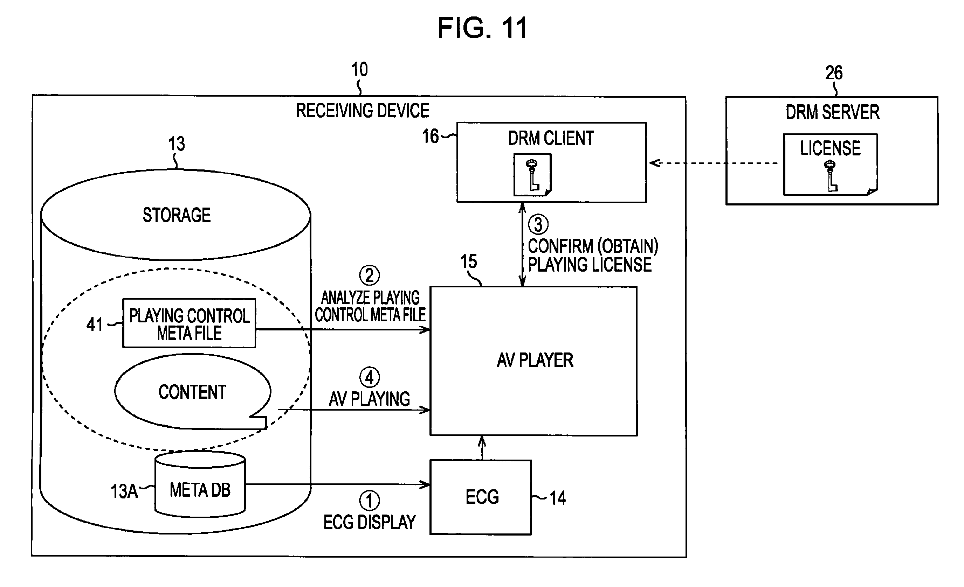

Next, an overview of the processing to play the content downloaded to the receiving device 10 will be described with reference to Fig. 11.

Corresponding to predetermined operations by the user, the ECG 14 generates a local content list based on the meta DB 13A held in the storage 13, and present this to the user. Upon the user selecting the content and instructing playing as to the presented local content list, the AV player 15 is started by the ECG 14, and information showing the selected content so as to play is notified from the ECG 14 as to the started AV player 15.

Corresponding to this notification, the AV player 15 reads and analyzes the playing control meta file 41 corresponding to the content from the storage 13, extracts the license ID of the playing license corresponds to the content, and confirms whether or not the playing license corresponding to the license ID is already held in the DRM client 16.

Now, in the case that the playing license corresponding to the license ID is not held in the DRM client 16, i.e. in the case that the license held in the DRM client 16 is a dummy license, of is a license for another use (e.g., preview-playing license, exporting license), upon obtaining approval for such as billing from the user, the DRM client 16 access the DRM server 26 based on the URI of the DRM server 26 described in the playing control meta file 41, obtains the playing license of the license ID described in the playing control meta file 41, and supplies the content key Kc included therein to the AV player 15.

Subsequently, the AV player 15 reads the content from the storage 13, decrypts the encryption of the content using the content key Kc supplied from the DRM client 16, decodes the encoded data obtained as a result thereof to obtain the AV data, and displays the corresponding video while outputting the audio.

Note that even if this is a true license, restrictions can be placed on the validity period and number of times to play. In such a case, the user is notified with each playing that the number of times remaining to play is reduced. Also, when the license becomes invalid, upon the user approval obtained, the billing can be performed again and a new license can be obtained.

This concludes the overview description of the playing processing.

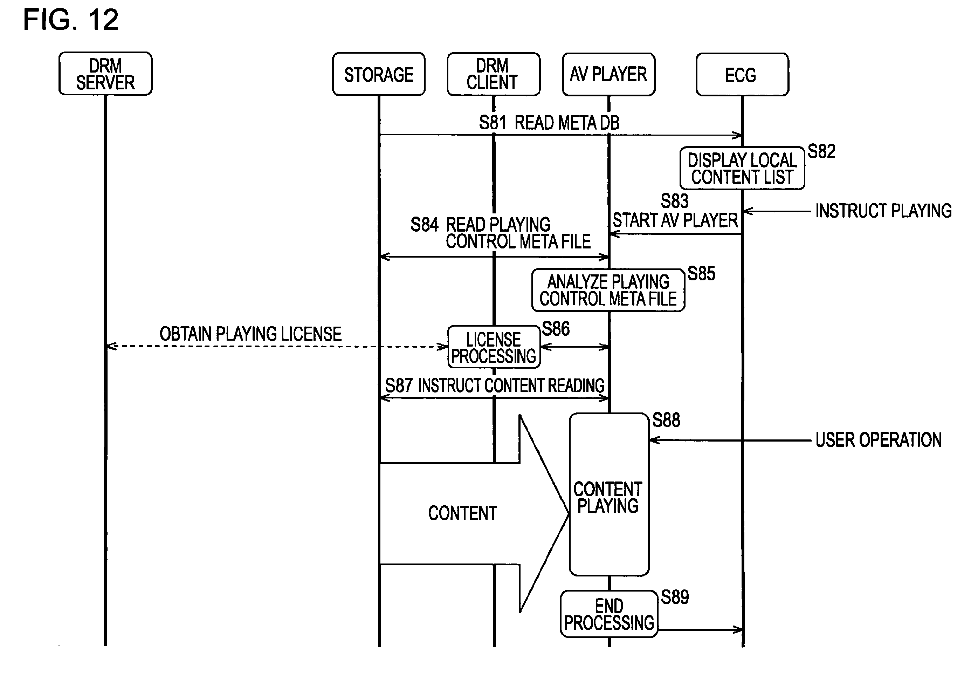

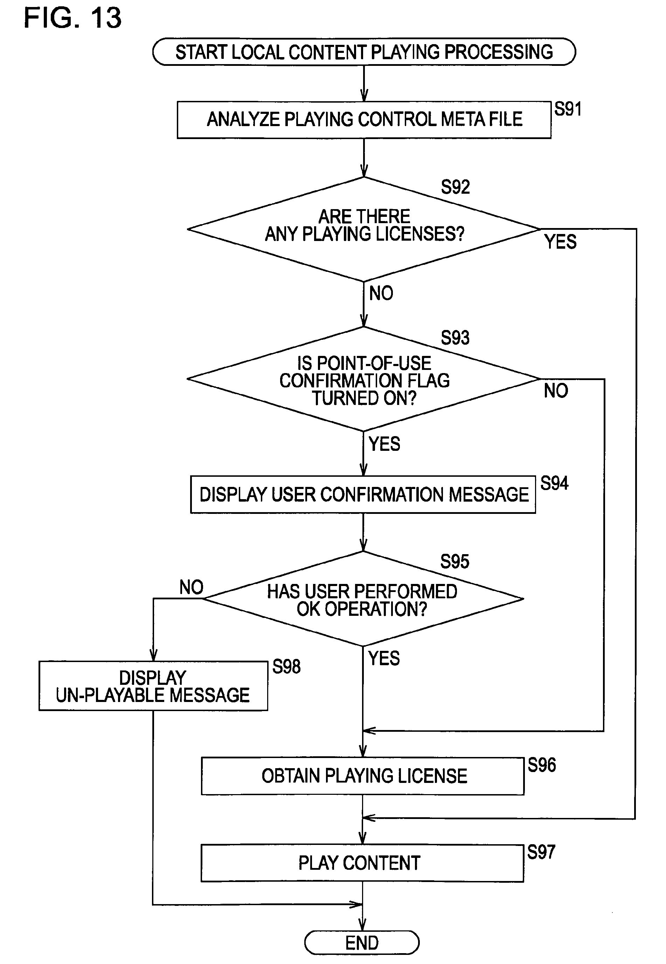

Next, more detailed operations of the playing processing will be described with reference to the timing chart in Fig. 12 and the flowchart in Fig. 13. Note that Fig. 13 focuses particularly on the processing of the AV player 15, out of the playing processing.

Corresponding to predetermined operations by the user, in step S81 the ECG 14 reads the meta DB 13A from the storage 13, and in step S82 generates the local content list which is a GUI based on the read out meta DB 13A, and presents this to the user.

Upon the user performing operations to select the content and instruct playing from the local content list, in step S83 the ECG 14 starts the AV player 15 notifies information showing the content for which playing has been instructed as to the started AV player 15.

In step S84 the AV player 15 reads the playing control meta file 41 corresponding to the content from the storage 13, and in step S85 analyzes the playing control meta file 41 and extracts the license ID of the playing license corresponding to the content (step S91 of Fig. 13).

Further, in step S86 the AV player 15 confirms whether or not the playing license corresponding to the license ID is already held in the DRM client 16 (step S92 in Fig. 13). In the case here that playing license corresponding to the license ID is not held in the DRM client 16, i.e. in the case the license held in the DRM client 16 is a dummy license or the like (YES in step S93 in Fig. 13), the AV player 15 notifies the user that in order to obtain the license necessary for playing the content, billing is generated, and presents the user with a confirmation message to confirm whether or not the generating of the billing is approved (step S94 in Fig. 13).

Now, in the case that approval of the billing that is generated by obtaining the license is obtained from the user (YES in step S95 in Fig. 13), the DRM client 16 access the DRM server 26 based on the URI of the DRM server 26 described in the playing control meta file 41, obtains the playing license corresponding to the license ID described in the playing control meta file 41, and after determining whether the usage conditions included therein are satisfied, supplies the content key Kc to the AV player 15 (step S96 in Fig. 13).

The AV player 15 having obtained the content key Kc instructs the content readout to the storage 13 in step S87, and in step S88 plays the content supplied from the storage 13 according to the instructions thereof (the encryption of the content is decrypted, the encoded data obtained as a result thereof is decoded and the AV data is obtained, while the corresponding video is displayed and audio is output) (step S97 in Fig. 13).
$
Note that as a result of presenting the confirmation message to the user, in the case that approval for billing generated by obtaining the license is not obtained from the user (NO in step S95 in Fig. 13), the AV player 15 presents to the user that the content cannot be played (step S98 in Fig. 13), and this local content playing processing is ended.

Note that in the event of content playing the AV player 15 is under the control of the user, and various types of operations (trick-play operations such as find-start playing, such as fast-forward playing, fast-rewind playing, and so forth) can be performed.

Upon the content ending playing, in step S89 the AV player 15 deletes the content key Kc from itself, and executes ending processing that includes processing to return from user control to ECG 14 control.

This concludes the description of the playing processing of the downloaded content. According to the above-described playing processing, whether or not the playing license is obtained by the DRM client 16 is confirmed in the event of playing the content, and in the case of not being obtained, the playing license is obtained anew from the DRM server 26. That is to say, the license is obtained twice altogether from the content download stage.

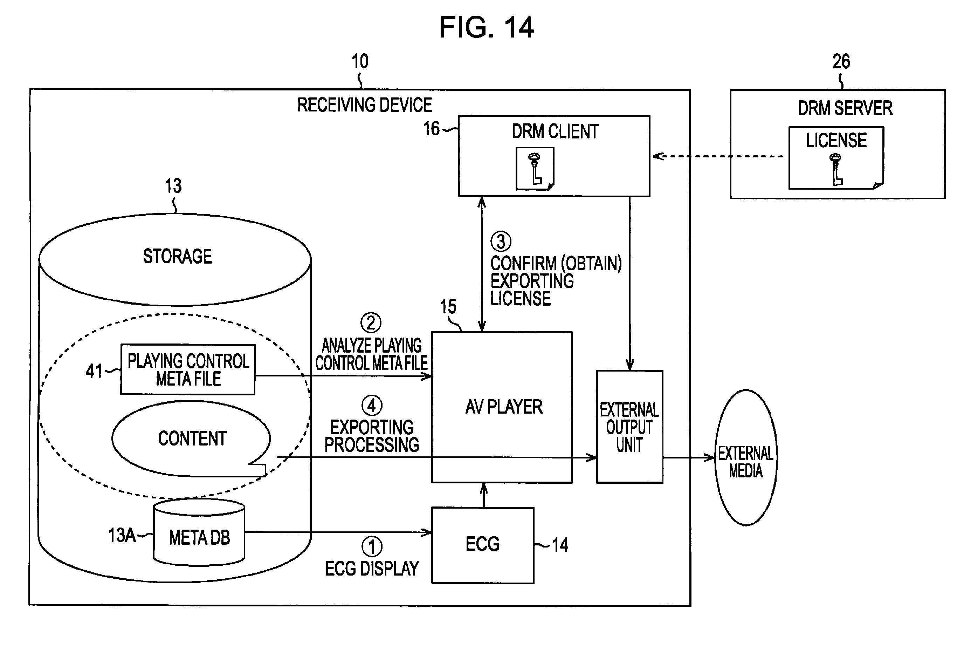

Next, an overview of the processing to export the content downloaded to the receiving device 10 will be described with reference to Fig. 14.

Corresponding to predetermined operations by the user, the ECG 14 generates a local content list based on the meta DB 13A held in the storage 13, and presents this to the user. The user selects the content from the presented local content list and instructs export thereof, whereby the AV player 15 is started by the ECG 14, and information showing the content selected to export as to the started AV player 15 is notified from the ECG 14.

Corresponding to this notification, the AV player 15 reads and analyzes the playing control meta file 41 corresponding to the content from the storage 13, and confirms whether or not the exporting license corresponding to the content is already held in the DRM client 16.

Now, in the case that the exporting license is not held in the DRM client 16, after approval for such as billing is obtained from the user, the DRM client 16 accesses the DRM server 26 and obtains the exporting license based on the URI of the DRM server 26 and the license ID of the exporting license described in the playing control meta file 41. The content key Kc included in the exporting license is then supplied to the AV player 15.

Subsequently, the AV player 15 reads the content from the storage 13, decrypts the encryption of the content using the content key Kc supplied from the DRM client 16, and supplies the encoded data obtained as a result to the external output unit 17. The external output unit 17 appropriately converts the encoding method and so forth of the supplied encoded data, and encrypts this again and outputs to an output destination downstream. This concludes the overview description of the exporting processing.

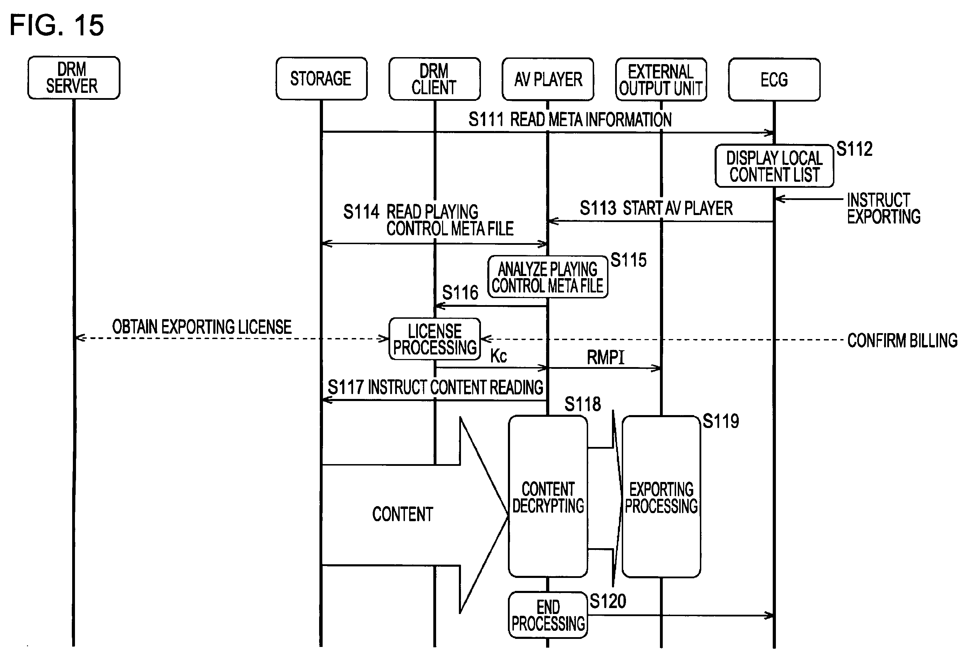

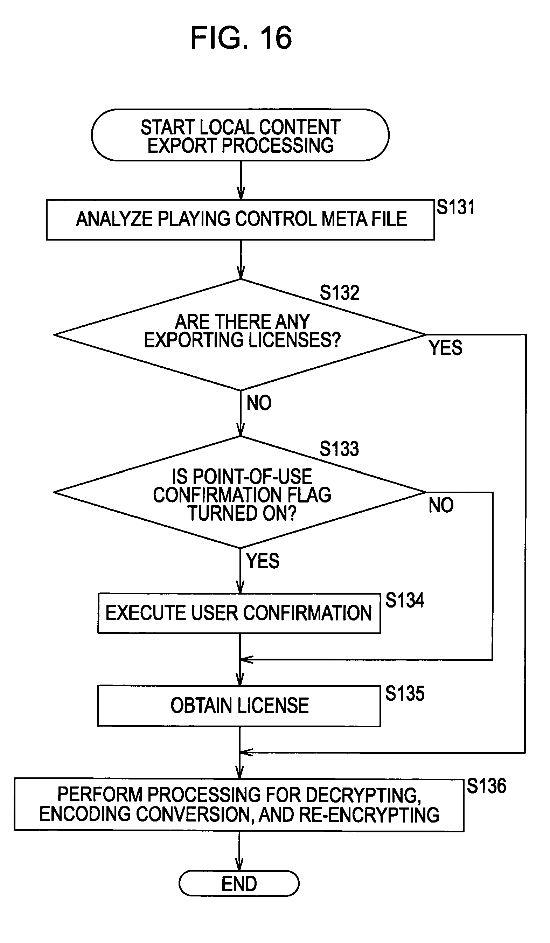

Next, more detailed operations of the exporting processing will be described with reference to the timing chart in Fig. 15 and the flowchart in Fig. 16. Note that of the exporting processing, Fig. 16 focuses particularly on the processing of the AV player 15 and the external output unit 17.

Corresponding to predetermined operations by the user, in step S111 the ECG 14 reads the meta DB 13A from the storage 13, and in step S112 generates a local content list which is a GUI based on the read out meta DB 13A and presents this to the user.

Upon the user performing operations to select the content and instruct exporting as to the local content list, in step S113 the ECG 14 starts the AV player 15, and notifies information showing the content for which exporting has been instructed as to the started AV player 15.

In step S114 the AV player 15 reads the playing control meta file 41 corresponding to the content from the storage 13, and in step S115 analyzes the playing control meta file 41 and extracts the license ID of the exporting license corresponding to the content (step S131 in Fig. 16).

Further, in step S116 the AV player 15 confirms whether or not the exporting license corresponding to the license ID is already held in the DRM client 16 (step S132 in Fig. 16). In the case that the exporting license corresponding to the license ID is not held in the DRM client 16, after obtaining approval for the billing that is generated by obtaining the exporting license (steps S133 and S134 in Fig. 16), the DRM client 16 accesses the DRM server 26 and obtains the exporting license, based on the URI of the DRM server 26 and the license ID of the exporting license, and determines whether the usage conditions included therein have been satisfied, followed by supplying the content key Kc to the AV player 15 (step S135 in Fig. 16).

The AV playing 15 having obtained the content key Kc instructs the storage 13 to read the content in step S117, and in step S118 decrypts the encryption of the content supplied from the storage 13 in response to this instruction, and supplies the encoded data obtained as a result thereof to the external output unit 17. In step S119 the external output unit 17 appropriately converts the encoding method and so forth of the supplied encoded data, encrypts this again and outputs to an output destination downstream (step S136 in Fig. 16).

Then, upon the content ending the exporting, in step S120 the AV player 15, and executes ending processing that includes processing of deleting the content key Kc from itself.

This concludes the description of the exporting processing of the downloaded content. According to the above-described exporting processing, whether or not the exporting license is already obtained by the DRM client 16 is confirmed in the event of exporting the content, and in the case of not being obtained, the license is obtained from the DRM server 26 after obtaining approval from the user.

Next, an operating mode of a download service that can execute using a content download system 1 to which the present invention is applied will be described. An operating mode indicates a combination of billing timing as to the usage of the content, usage mode, and multiple uses of the content.

Billing timing may be assuming to be three types of timing of pre-download billing, post-download billing, and point-of-service billing, but for pre-download billing and post-download billing, the user can be notified on a screen displayed by the browser 11 that the billing will be generated. For point-of-service billing, the user can be notified and provided confirmation as to whether or not billing is generated and the amounts and so forth by displaying this on a screen displayed by the ECG 14.

Usage modes may be largely divided into two types of playing (viewing/listening to content) and exporting (output to an external device). Note that for playing, normal playing, (e.g., playing periods such as 7 nights 8 days is set, but also described as rental viewing/listening), previewing (test viewing/listening), and additional playing for use after the period of normal playing (rental viewing/listening) has expired (e.g., one night additional), as well as progressive download playing that starts playing before the download is completed, may be assumed. Further, an exporting license whereby one copy can be made to a DVD or the like may also be assumed. The usage conditions of the license differ for each of these usage modes, and the distinction thereof is described as license type in the item <license_type> of the playing control meta file 41.

Multiple uses of one content assumes not only a single usage mode one time as to the downloaded content, but assumes multiple usage modes, specifically, multiple differing usage modes by the multiple licenses identified by the above-described license types and the billing timing for each usage mode can be set as to the already-downloaded content. For example, for content that has obtained a license beforehand for the normal playing of 7 nights 8 days with post-download billing, it is assumed that after the download further an exporting license whereby one copy can be made as to a DVD or the like can be additionally purchased, and so forth.

The above-described operating modes which are combinations of the billing timing, usage modes, and multiple use of the content can be assumed to have many types, but considering realistic operations, for each of the seven operating modes of patterns a through g shown below, the transition of screens presented to the user, operation sequences, and the corresponding download control meta file 31 and playing meta file 41, will be described.

Pattern a: post-download billing / normal playing
Pattern b: post-download billing / export
Pattern c: point-of-use billing / playing
Pattern d: point-of-use billing / export
Pattern e: post-download billing / playing + point-of-use billing / additional playing
Pattern f: preview + point-of-use billing / export
Pattern g: pre-download billing / progressive download playing + normal playing

The operating mode of pattern a is a service to provide a playable period for the content such as 7 nights 8 days and allow rental viewing/listening, whereby billing is performed at the stage of the content having been downloaded.

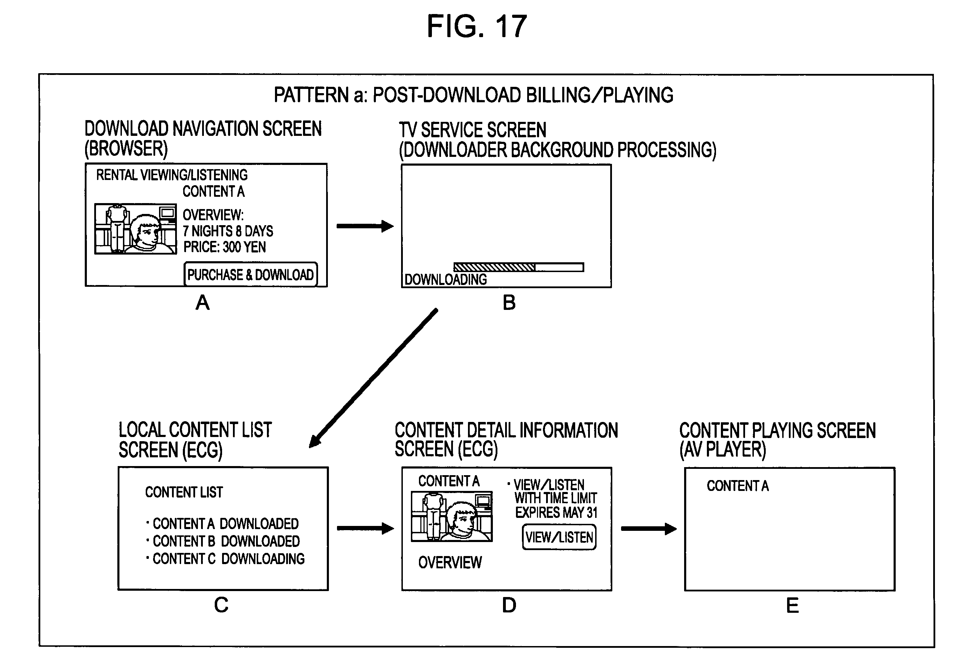

Fig. 17 shows the transition of screens presented to the user, corresponding to a pattern a operating mode. First, a download navigation screen is displayed by the browser 11, and the user selects content A to download on the download navigation screen, whereby, as shown in A of the drawing, a confirmation screen made up of a reduced-size image corresponding to the content, overview of the content, information such as "rental viewing/listening", "7 nights 8 days", "price 300 yen" and so forth, and a "purchase and download" button is displayed, and upon the "purchase and download" button being operated on the confirmation screen, the download starts. The screen display is transitioned to that which shows that the download is in progress, as shown in B of the drawing.

After completing the download of content A, upon the user performing predetermined operations, a local content list such as shown in C of the drawing is displayed by the ECG 14. Upon the content A being selected from the local content list, a content detail information screen made up of the overview description of content A, reduced-size image, and "view/listen" button such as shown in D of the drawing is displayed, and upon the "view/listen" button being operated, the playing of the content A is started by the AV player 15 as shown in E of the drawing. Note that the various types of information in A of the drawing through D of the drawing are displayed based on the description content of the playing control meta file 41.

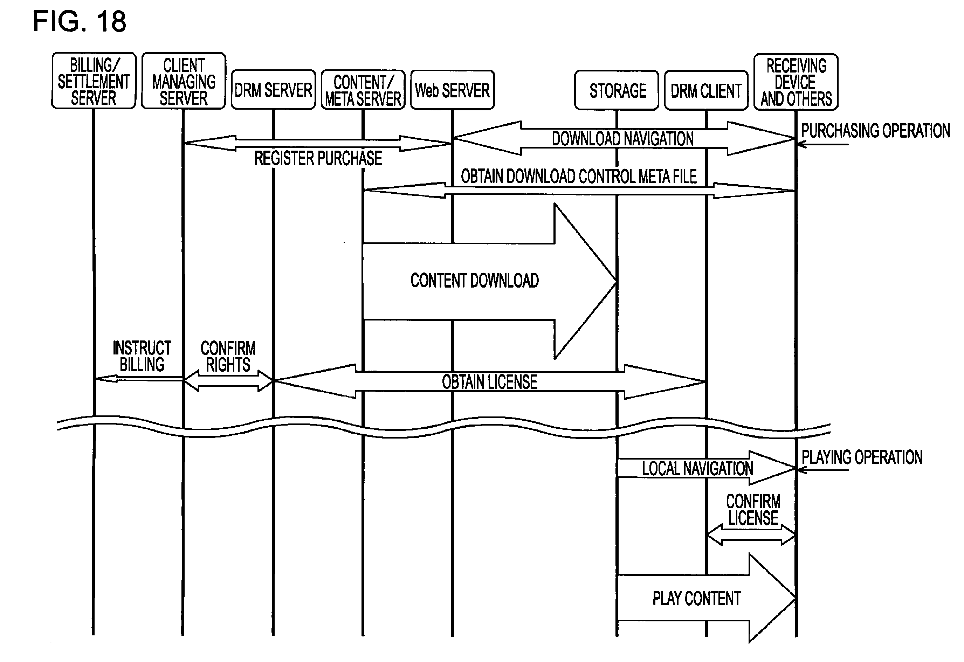

Fig. 18 shows a processing sequence corresponding to the pattern a operating mode. In pattern a, upon the selection of content by the user in the download navigation page displayed by the browser 11 and a purchase operation (specifically, operation as to the "purchase and download" button in A in Fig. 17) having been performed, a purchase registration is notified to the client managing server 22, the download control meta file 31 is obtained by the downloader 12, and the content is downloaded according to the download control meta file 31. In response to the content download having completed, a license is then requested from the DRM client 16 as to the DRM server 26, and a playing license is supplied from the DRM server 26 to the DRM client 16. At this stage, the client managing server 22 can comprehend that the receiving device 10 has already downloaded the content, whereby at this stage billing is performed by the billing/settlement server 23. Also, hereafter, the information of the completed download is reflected in the download navigation page.

Subsequently, upon a playing operation (specifically an operation as to the "view/listen" button in D in Fig. 17) being performed as to the already-downloaded content, the AV player 15 is started by the ECG 14, and whether or not there are any playing licenses is confirmed as to the DRM client 16 from the AV player 15. In this case, the playing license is already held, whereby the content key Kc is extracted from the playing license and supplied to the AV player 15, and the content is played by the AV player 15 (decryption of the encryption and decryption of the encoding).

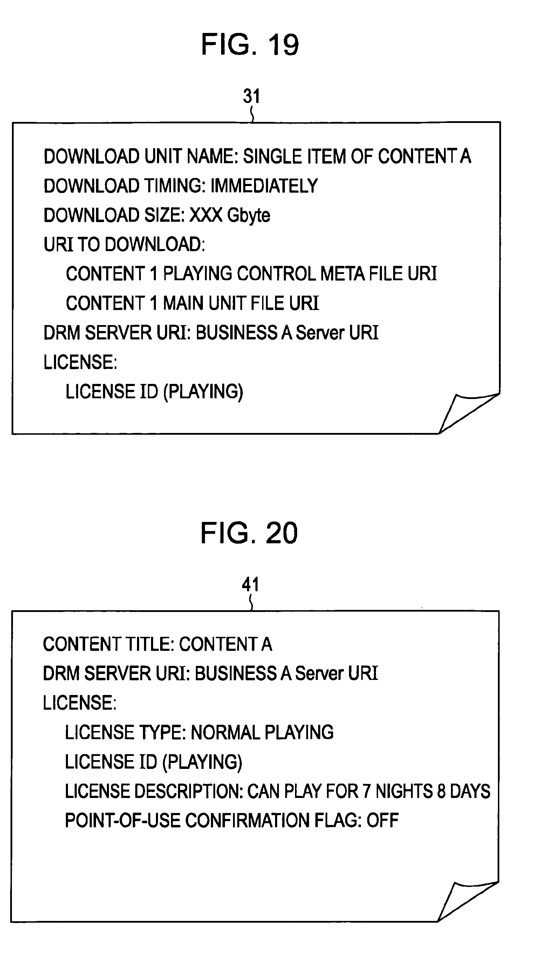

Note that in the case the playing license is not held in the DRM client 16 for some reason (e.g. in the case the obtaining of the playing license has failed due to communication obstruction or the like), the DRM client 16 requests the license as to the DRM server 26. In this event, the point-of-use confirmation flag of the playing control meta file 41 is turned off (described later with reference to fig. 20), processing to obtain user approval is not executed, and the license is obtained.

Fig. 19 shows a description example of the download control meta file 31 corresponding to the pattern a operating mode. A feature of the download control meta file 31 corresponding to the pattern a operating mode is the point that the ID of the playing license, which is a true license, is described in the license ID item.

Fig. 20 shows a description example of the playing control meta file 41 corresponding to the pattern a operating mode. A feature of the playing control meta file 41 corresponding to the pattern a operating mode is in the point that that normal playing is described in the license type item, and that an ID of the playing license which is a true license, which is the same license ID as described in the license ID item of the download control meta file 31, is described in the license ID item. Also, a point is that the point-of-use confirmation flag is turned off.

A pattern b operating mode is a service to copy the content to a DVD one time, and billing is performed at the stage of the content having been downloaded.

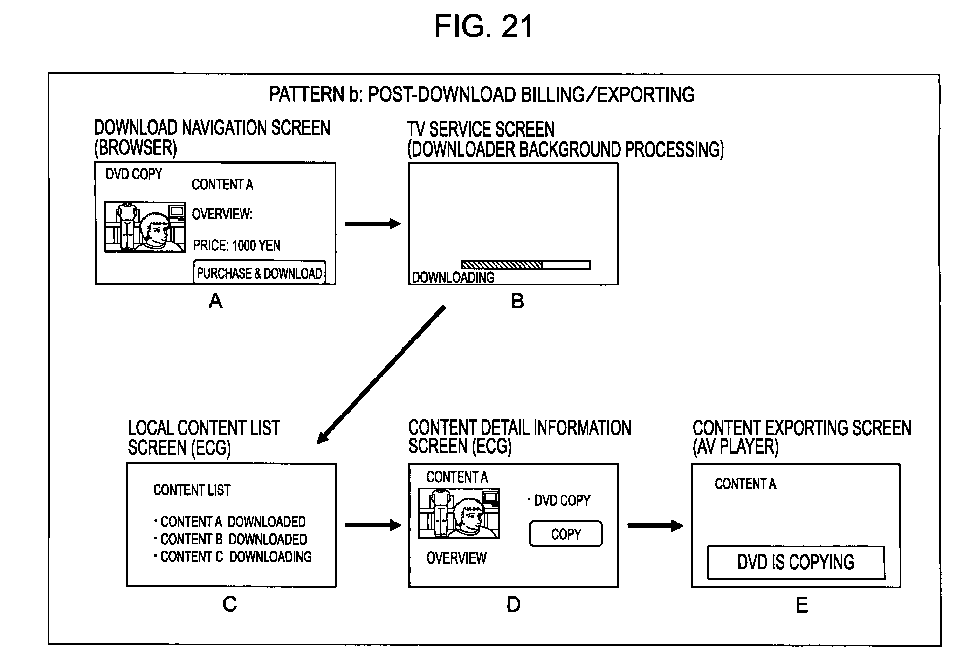

Fig. 21 shows the transition of screens presented to the user, corresponding to a pattern b operating mode. First, a download navigation screen is displayed by the browser 11, and the user selects content A to download on the download navigation screen, whereby, as shown in A in the drawing, a confirmation screen made up of a reduced-size image corresponding to the content A, overview of the content A, information such as "DVD copy", "price 1000 yen" and so forth, and a "purchase and download" button is displayed, and upon the "purchase and download" button being operated on the confirmation screen, the download starts. The screen display is then transitioned to that which shows that the download is in process, as shown in B in the drawing.

After completing the download of content A, upon the user performing predetermined operations, a local content list such as shown in C in Fig. 21 is displayed by the ECG 14. Upon the content A being selected from the local content list, a content detail information screen made up of the overview description of content A, reduced-size image, and "copy" button such as shown in D in the drawing is displayed, and upon the "copy" button being operated, the exporting of the content A is started by the AV player 15 as shown in E in the drawing. Note that the various types of information in A in the drawing through D in the drawing are displayed based on the description content of the playing control meta file 41.

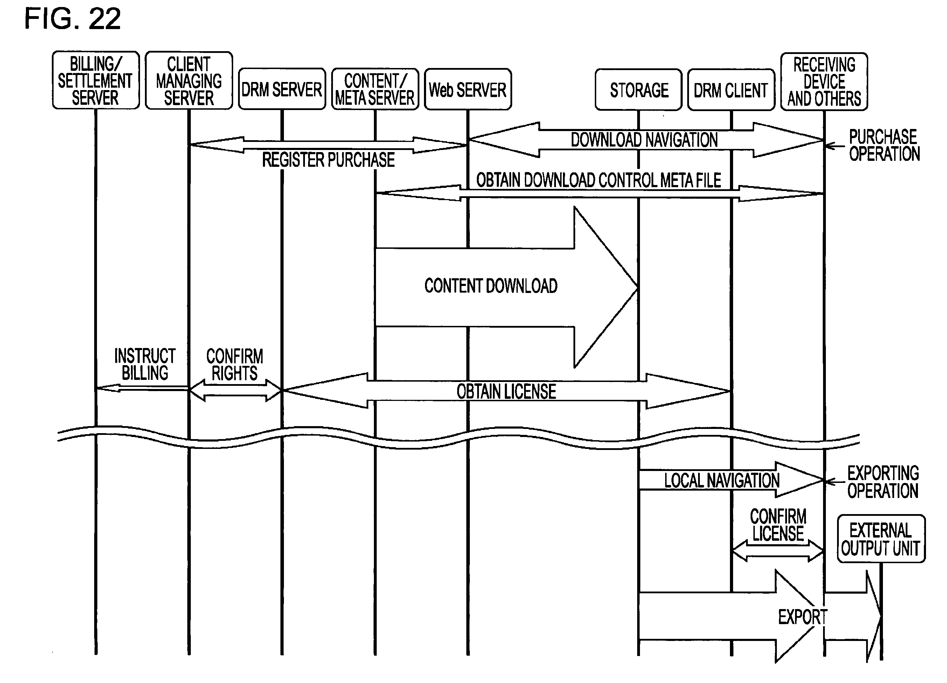

Fig. 22 shows a processing sequence corresponding to the pattern b operating mode. In pattern b, upon the selection of content by the user in the download navigation page displayed by the browser 11 and a purchase operation (specifically, operation as to the "purchase and download" button in A in Fig. 21) having been performed, a purchase registration is notified to the client managing server 22, the download control meta file 31 is obtained by the downloader 12, and the content is downloaded according to the download control meta file 31. In response to the content download having completed, a license is then requested from the DRM client 16 as to the DRM server 26, and an exporting license is supplied from the DRM server 26 to the DRM client 16.
At this stage, the client managing server 22 can comprehend that the receiving device 10 has already downloaded the content, whereby at this stage billing is performed by the billing/settlement server 23. Also, hereafter, the information of the completed download is reflected in the download navigation page.

Subsequently, upon an exporting operation (specifically an operation as to the "copy" button in D in Fig. 21) being performed as to the already-downloaded content, the AV player 15 is started by the ECG 14, and whether or not there are any exporting licenses is confirmed as to the DRM client 16 from the AV player 15. In this case, the exporting license is already held, whereby the content key Kc is extracted from the exporting license and supplied to the AV player 15 by the DRM client 16, the encryption of the content is decrypted by the AV player 15, the encoded data obtained as a result thereof is supplied to the external output unit 17, the encoding method is changed as appropriate and encrypted again, and output to an output destination (DVD recorder or the like).

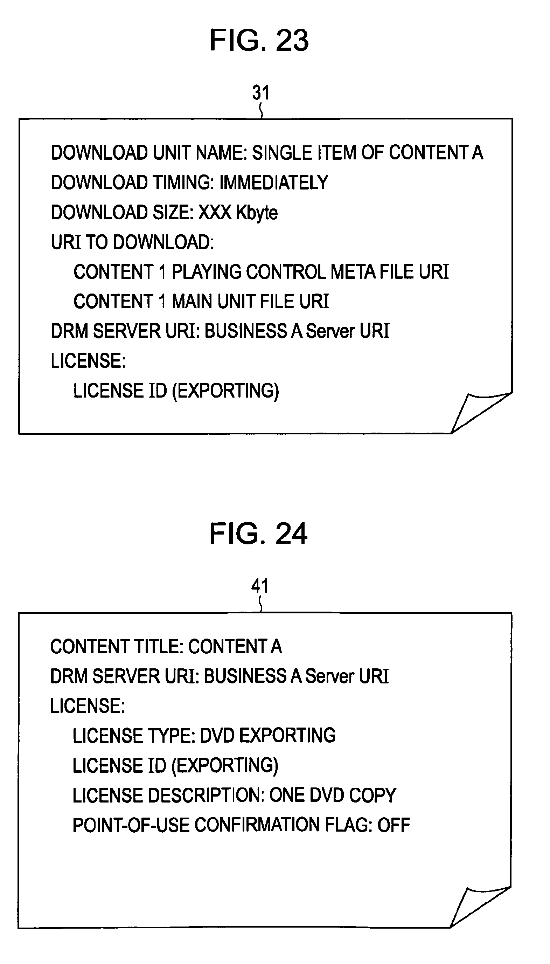

Note that in the case the exporting license is not held in the DRM client 16 for some reason (e.g. in the case the obtaining of the exporting license has failed due to communication obstruction or the like), the DRM client 16 requests the license as to the DRM server 26. In this event, the point-of-use confirmation flag of the playing control meta file 41 is turned off (described later with reference to Fig. 24), processing to obtain user approval is not executed, and the license is obtained.

Fig. 23 shows a description example of the download control meta file 31 corresponding to the pattern b operating mode. A feature of the download control meta file 31 corresponding to the pattern b operating mode is the point that the ID of the exporting license, which is a true license, is described in the license ID item.

Fig. 24 shows a description example of the playing control meta file 41 corresponding to the pattern b operating mode. A feature of the playing control meta file 41 corresponding to the pattern b operating mode is in the point that DVD export is described in the license type item, and that an ID of the exporting license which is a true license, which is the same license ID as described in the license ID item of the download control meta file 31, is described in the license ID item. Also, a point is that the point-of-use confirmation flag is turned off.

A pattern c operating mode is a service for rental viewing/listening of the content providing a playable time period such as 7 nights 8 days, and billing is performed at the stage of the playing the download.

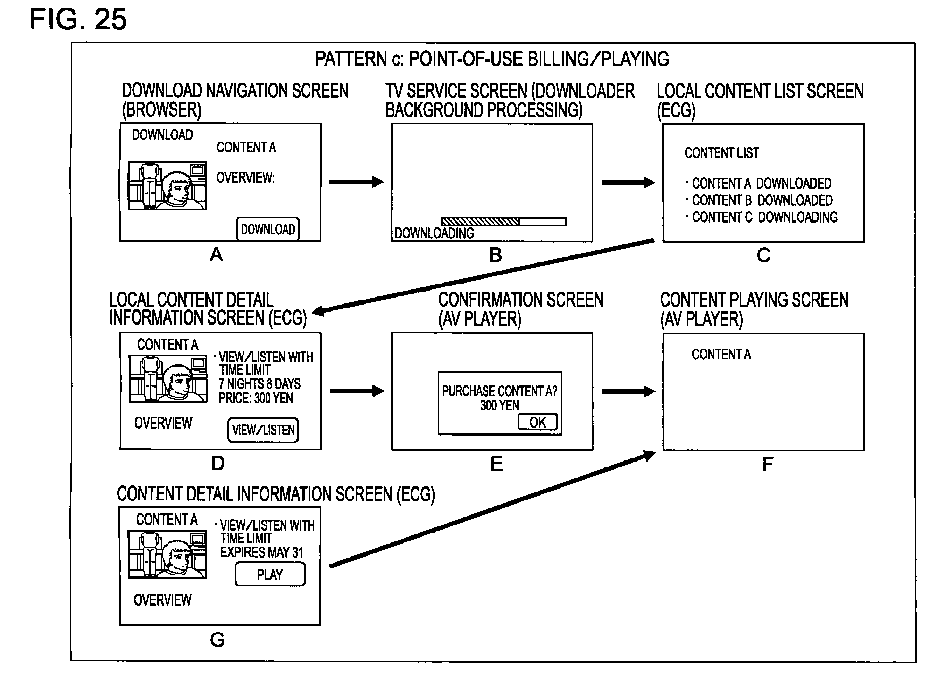

Fig. 25 shows the transition of screens presented to the user, corresponding to a pattern c operating mode. First, a download navigation screen is displayed by the browser 11, and the user selects content A to download on the download navigation screen, whereby, as shown in A in the drawing, a confirmation screen made up of a reduced-size image corresponding to the content A, overview of the content A, information such as "download", and a "DL" button is displayed, and upon the "DL" button being operated on this confirmation screen, the download starts. The screen display is then transitioned to that which shows that the download is in process, as shown in B in the drawing.

After completing the download of content A, upon the user performing predetermined operations, a local content list such as shown in C in the drawing is displayed by the ECG 14. Upon the content A being selected from the local content list, a content detail information screen made up of a description relating to the license of content A ("view/listen for restricted time", "7 nights 8 days", and "price: 300 yen"), the overview description of the content, reduced-size image, and "view/listen" button such as shown in D in the drawing is displayed, and upon the "view/listen" button being operated, the screen is transitioned to a confirmation screen to obtain billing approval from the user as shown in E in the drawing, and only in the case that the "OK" button is operated on the confirmation screen is the playing license which is a true license obtained at this stage, and the playing of the content A is started by the AV player 15 as shown in F in the drawing. When playing the second time or thereafter within the viewing/listening time limit as to the content A (7 nights 8 days in this case), after D in the drawing, the screen transition then skips to E in the drawing, and the content A is played immediately without obtaining approval from the user. Note that the various types of information in A in the drawing, D in the drawing, and E in the drawing are displayed based on the description content of the playing control meta file 41.

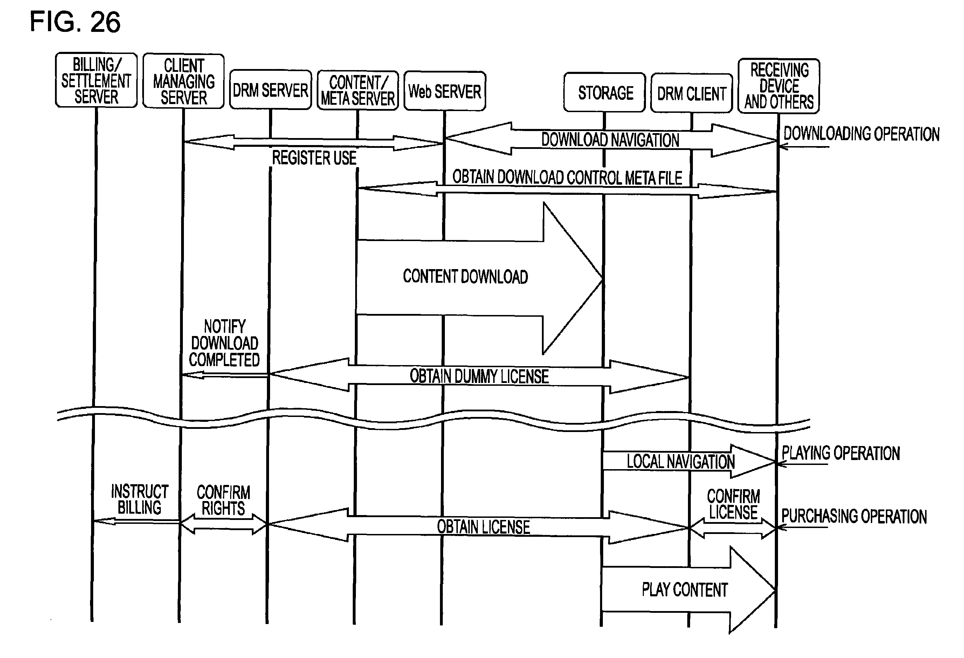

Fig. 26 shows a processing sequence corresponding to the pattern c operating mode. In pattern c, upon the selection of content by the user in the download navigation page displayed by the browser 11 and a download operation (specifically, operation as to the "DL" button in A in Fig. 25) having been performed, a use registration is notified to the client managing server 22, the download control meta file 31 is obtained by the downloader 12, and the content is downloaded according to the download control meta file 31. In response to the content download having completed, a license is then requested from the DRM client 16 as to the DRM server 26, and a dummy license is supplied from the DRM server 26 to the DRM client 16. At this stage, the client managing server 22 can comprehend that the receiving device 10 has already downloaded the content. Hereafter, the information of the completed download is reflected in the download navigation page.

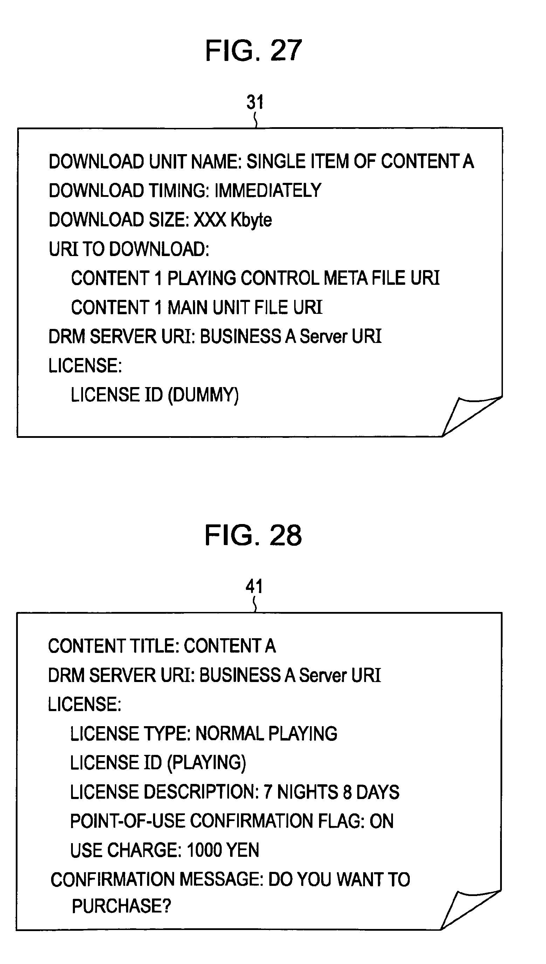

Subsequently, upon a playing operation (specifically an operation as to the "view/listen" button in D in Fig. 25) being performed as to the already-downloaded content, the AV player 15 is started by the ECG 14, and whether or not there are any playing licenses is confirmed as to the DRM client 16 from the AV player 15. In this case, only a dummy license is held and a playing license is not held, whereby the DRM client 16 is to request a playing license with the license ID described in the playing control meta file 41 from the DRM server 26. However, the point-of-use confirmation flag of the playing control meta file 41 is turned on (described later with reference to Fig. 28), whereby approval to generate billing has to be obtained from the user prior to this request. Upon the approval being obtained from the user, the DRM client 16 then requests the playing license from the DRM server 26.

Corresponding to this request, upon confirming the client information of the client managing server 22, the DRM server 26 supplies the playing license to the DRM client 16. At this stage, the client managing server 22 can comprehend that the receiving device 10 has already downloaded and will use the content, whereby billing is performed by the billing/settlement server 23.

With the receiving device 10, the content key Kc is extracted from the playing license by the DRM client 16 and supplied to the AV player 15, and the content is played by the AV player 15 (decryption of the encryption and decryption of the encoding).

Fig. 27 shows a description example of the download control meta file 31 corresponding to the pattern c operating mode. A feature of the download control meta file 31 corresponding to the pattern c operating mode is the point that the ID of the dummy license is described in the license ID item.

Fig. 28 shows a description example of the playing control meta file 41 corresponding to the pattern c operating mode. A feature of the playing control meta file 41 corresponding to the pattern c operating mode is in the point that normal playing is described in the license type item, and that an ID of the playing license which is a true license, which is different from the license ID (license ID of the dummy license) as described in the license ID item of the download control meta file 31, is described in the license ID item. Also, a point is that the point-of-use confirmation flag is turned on.

The pattern d operating mode is a service to copy the content to a DVD only one time, and billing is performed at the stage that the content is copied.

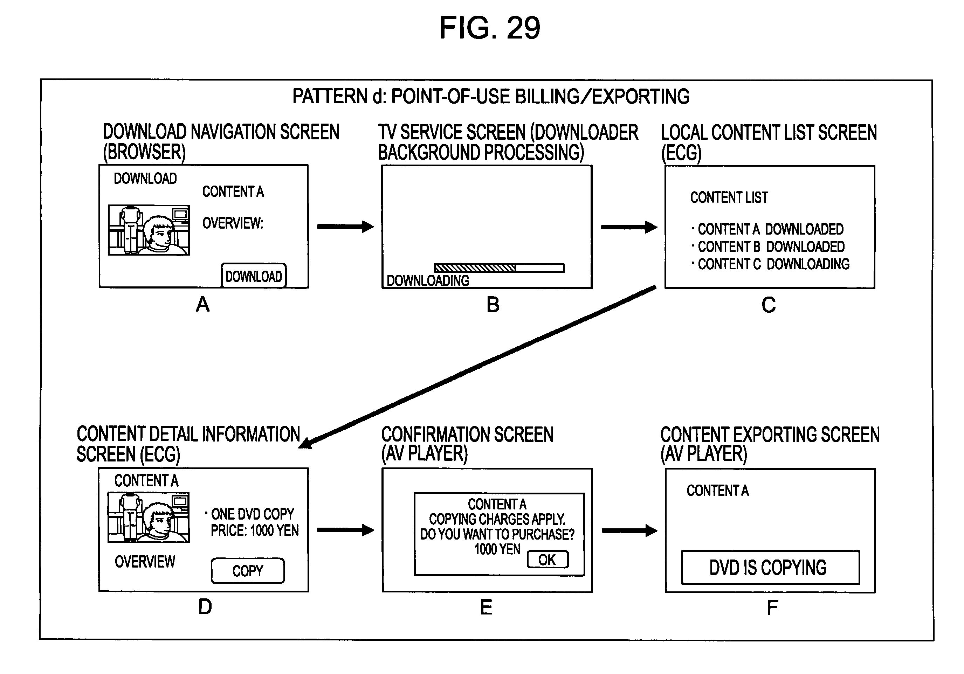

Fig. 29 shows the transition of screens presented to the user, corresponding to a pattern d operating mode. First, a download navigation screen is displayed by the browser 11, and the user selects content A to download on the download navigation screen, whereby, as shown in A in the drawing, a confirmation screen made up of a reduced-size image corresponding to the content A, overview of the content A, information such as "download", and a "DL" button is displayed, and upon the "DL" button being operated, the download starts. The screen display is transitioned to that which shows that the download is in process, as shown in B in the drawing.

After completing the download of content A, upon the user performing predetermined operations, a local content list such as shown in C in the drawing is displayed by the ECG 14. Upon the content A being selected from the local content list, a content detail information screen made up of a description relating to the license of content A ("copy to DVD one time" and "price: 300 yen"), the overview description of content A, reduced-size image, and "copy" button such as shown in D in the drawing is displayed, and upon the "copy" button being operated, the screen is transitioned to a confirmation screen as shown in E in the drawing to obtain billing approval from the user, and only in the case that the "OK" button is operated on the confirmation screen is the exporting license which is a true license obtained at this stage, and the exporting of the content A is started by the AV player 15 and external output unit 17 as shown in E in the drawing. Note that the various types of information in A in the drawing, D in the drawing, and E in the drawing are displayed based on the description content of the playing control meta file 41.

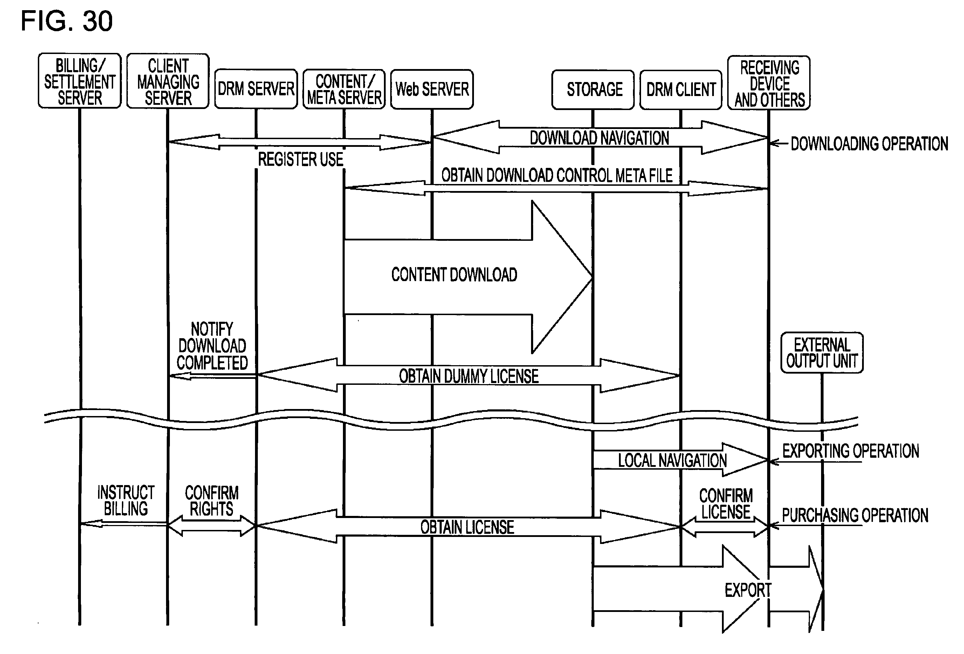

Fig. 30 shows a processing sequence corresponding to the pattern d operating mode. In pattern d, upon the selection of content by the user in the download navigation page displayed by the browser 11 and a download operation (specifically, operation as to the "DL" button in A in Fig. 29) having been performed, a use registration is notified to the client managing server 22, the download control meta file 31 is obtained by the downloader 12, and the content is downloaded according to the download control meta file 31. In response to the content download having completed, a license is then requested from the DRM client 16 as to the DRM server 26, and a dummy license is supplied from the DRM server 26 to the DRM client 16. At this stage, the client managing server 22 can comprehend that the receiving device 10 has already downloaded the content. Hereafter, the information of the completed download is reflected in the download navigation page.

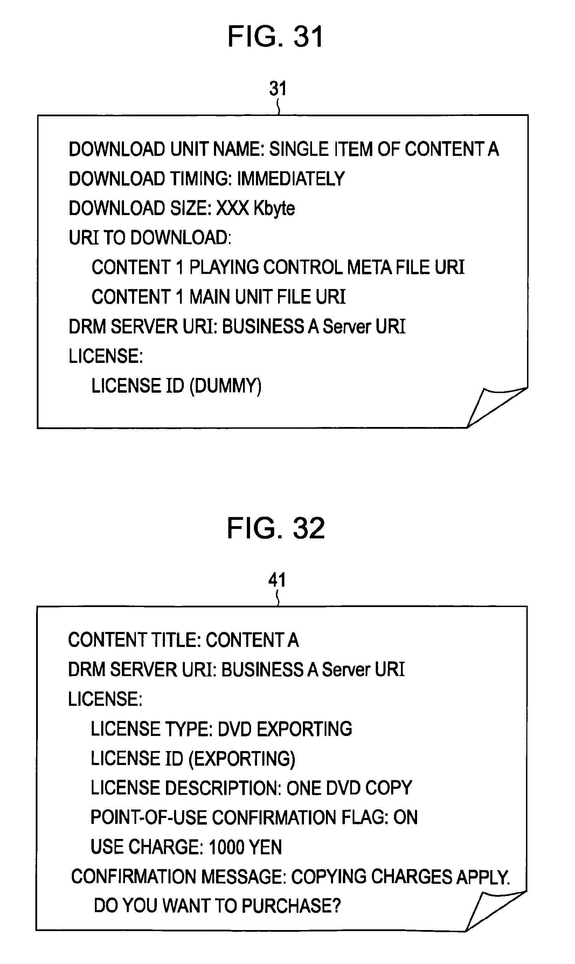

Subsequently, upon an exporting operation (specifically an operation as to the "copy" button in D in Fig. 29) being performed as to the already-downloaded content, whether or not there are any exporting licenses is confirmed as to the DRM client 16 from the AV player 15. In this case, only a dummy license is held and an exporting license is not held, whereby the DRM client 16 is to request an exporting license with the license ID described in the playing control meta file 41 from the DRM server 26. However, the point-of-use confirmation flag of the playing control meta file 41 is turned on (described later with reference to Fig. 32), whereby approval to generate billing has to be obtained from the user prior to this request. Upon the approval being obtained from the user, the DRM client 16 requests the exporting license from the DRM server 26.

Corresponding to this request, upon confirming the client information of the client managing server 22, the DRM server 26 supplies the exporting license to the DRM client 16. At this stage, the client managing server 22 can comprehend that the receiving device 10 has already downloaded and will use the content, whereby billing is performed by the billing/settlement server 23.

With the receiving device 10, the content key Kc is extracted from the exporting license by the DRM client 16 and supplied to the AV player 15, the encryption of the content is decrypted by the AV player 15, the encoded data obtained as a result thereof is supplied to the external output unit 17, the encoding method is changed as appropriate to encrypt the data again and output to an output destination (DVD recorder or the like).

Fig. 31 shows a description example of the download control meta file 31 corresponding to the pattern d operating mode. A feature of the download control meta file 31 corresponding to the pattern d operating mode is the point that the ID of the dummy license is described in the license ID item.

Fig. 32 shows a description example of the playing control meta file 41 corresponding to the pattern d operating mode. A feature of the playing control meta file 41 corresponding to the pattern d operating mode is a point in that DVD exporting is described in the license type item, and that an ID of the exporting license which is a true license, which is different from the license ID (license ID of a dummy license) as described in the license ID item of the download control meta file 31, is described in the license ID item. Also, a point is that the point-of-use confirmation flag is turned on.

The pattern e operating mode is a service to provide a playable period such as 7 nights 8 days for rental viewing/listening of content, and further enables extending of the playable period, wherein at the stage that the content is downloaded billing is performed for the playable period worth, and when the playable period is extended that amount is billed.

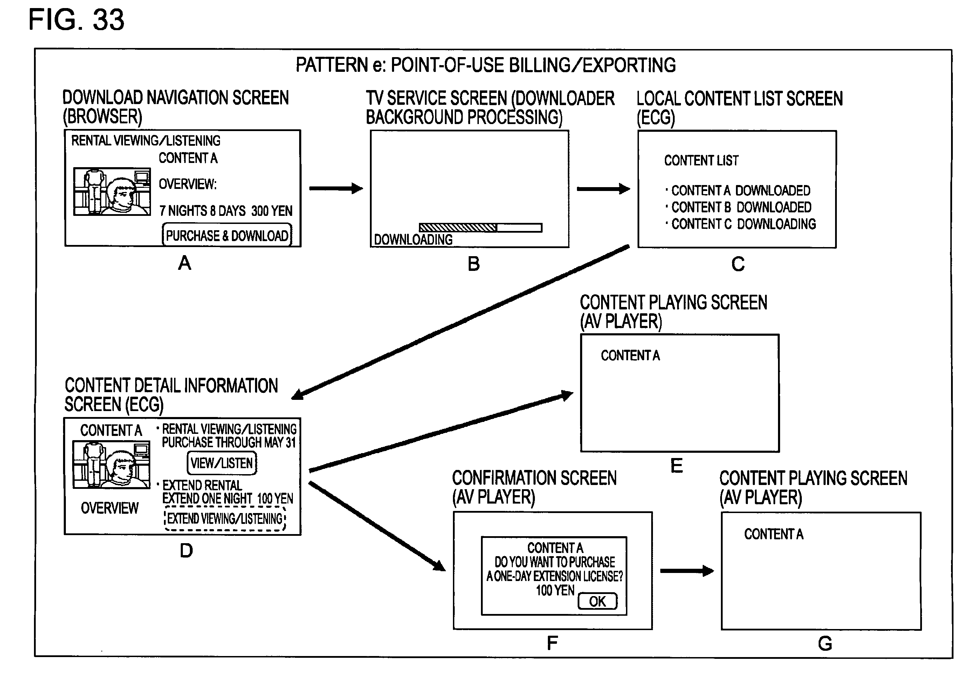

Fig. 33 shows the transition of screens presented to the user, corresponding to a pattern e operating mode. First, a download navigation screen is displayed by the browser 11, and the user selects content A to download on the download navigation screen, whereby, as shown in A in the drawing, a confirmation screen made up of a reduced-size image corresponding to the content, overview of the content, information such as "rental viewing/listening", "7 nights 8 days", "price 300 yen" and so forth, and a "purchase and download" button is displayed, and upon the "purchase and download" button being operated, on the confirmation screen, the download starts. The screen display is then transitioned to that which shows that the download is in process, as shown in B in the drawing.

After completing the download of content A, upon the user performing predetermined operations, a local content list such as shown in C in the drawing is displayed by the ECG 14. Upon the content A being selected from the local content list, a content detail information screen made up of the overview description of content A, reduced-size image, and information relating to the playing license of "purchase by May 31", a "view/listen" button, and information relating to the additional playing license of "extend rental - one day extension 100 yen" and an "extend viewing/listening" button such as shown in D in the drawing, is displayed.

However, within the playable period (in this case, until May 31), only the "view/listen" button can be operated, and the "extend viewing/listening" button cannot be operated. Conversely, after the playable period has ended, the "view/listen" button cannot be operated, and only the "extend viewing/listening" button can be operated. Note that an arrangement may be made wherein the information relating to additional playing and the "extend viewing/listening" button are not displayed within the playable period, and these are displayed after the playable period has ended.

Also, on the supplying device 20 side, within the playable period (in this case, until May 31), the additional playing license is not supplied.

Upon the "view/listen" button being operated at the content detail information screen, the playing of the content A is started by the AV player 15 as shown in E in the drawing. After the playable period has ended upon the "extend viewing/listening" button being operated in the content detail information screen, the screen is transitioned to a confirmation screen in F in the drawing to obtain approval from the user for billing, and only in the case that the "OK" button is operated is the additional playing license obtained, and as shown in G in the drawing the playing of content A is started by the AV player 15.

Note that the various types of information in A in the drawing, D in the drawing, and F in the drawing are displayed based on the description content of the playing control meta file 41.

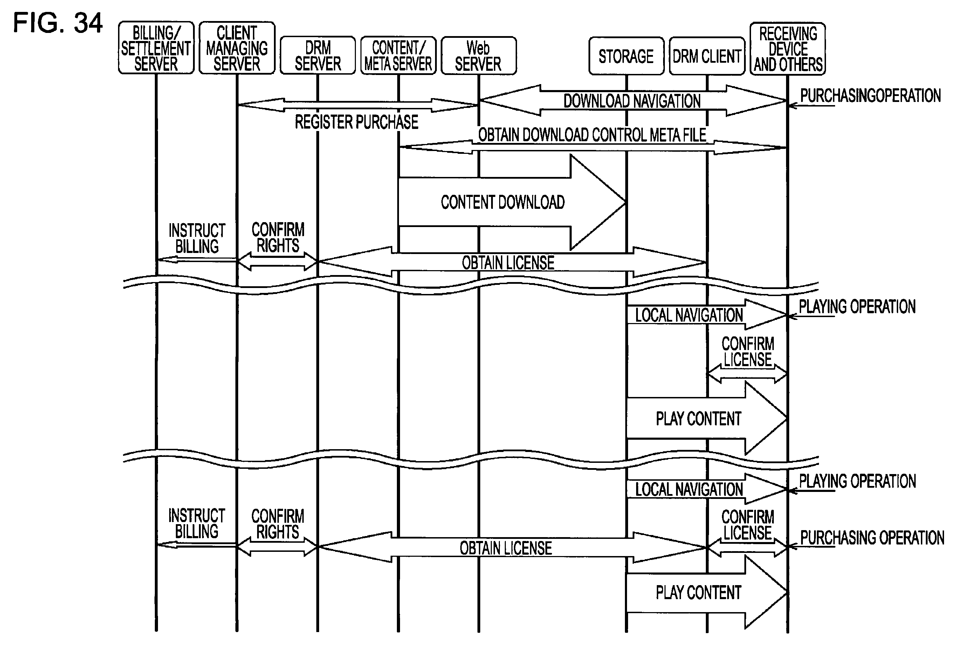

Fig. 34 shows a processing sequence corresponding to the pattern e operating mode. In pattern e, upon the selection of content by the user in the download navigation page displayed by the browser 11 and a purchase operation (specifically, operation as to the "purchase and download" button in A in Fig. 33) having been performed, a purchase registration is notified to the client managing server 22, the download control meta file 31 is obtained by the downloader 12, and the content is downloaded according to the download control meta file 31. In response to the content download having completed, a license is then requested from the DRM client 16 as to the DRM server 26, and a playing license is supplied from the DRM server 26 to the DRM client 16. At this stage, the client managing server 22 can comprehend that the receiving device 10 has already downloaded the content, whereby at this stage billing is performed by the billing/settlement server 23. Also, hereafter, the information of the completed download is reflected in the download navigation page.

Subsequently, upon a playing operation (specifically an operation as to the "view/listen" button in D in Fig. 33) being performed as to the already-downloaded content in the playable period, the AV player 15 is started by the ECG 14, and whether or not there are any playing licenses is confirmed as to the DRM client 16 from the AV player 15. In this case, the playing license is already held, whereby the content key Kc is extracted from the playing license by the DRM client 16 and supplied to the AV player 15, and the content is played by the AV player 15 (decryption of the encryption and decryption of the encoding).

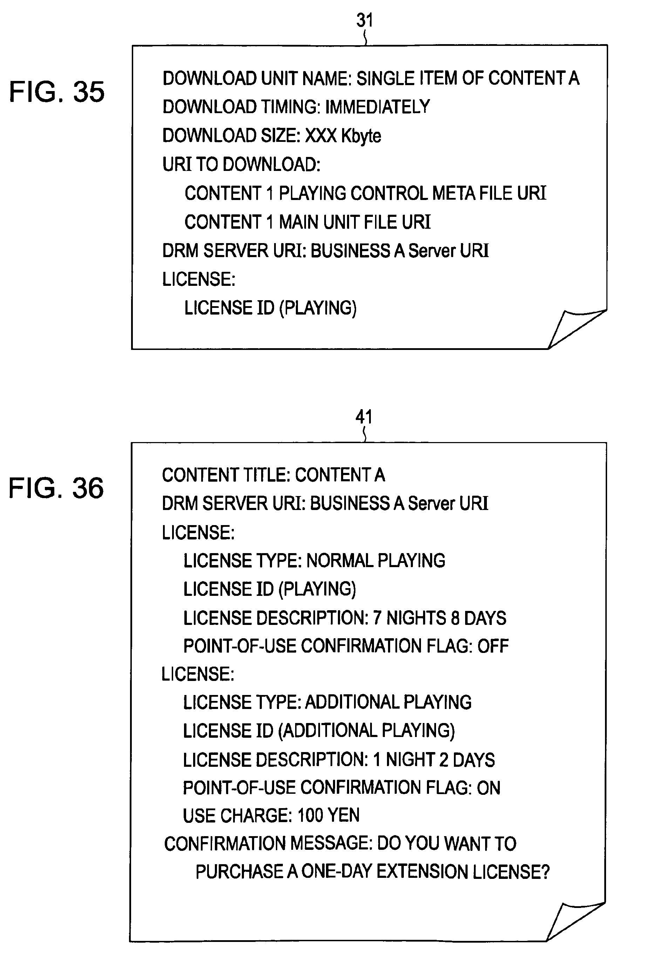

Note that in the case the playing license is not held in the DRM client 16 for some reason (e.g. in the case the obtaining of the playing license has failed due to communication obstruction or the like), the DRM client 16 requests the license as to the DRM server 26. In this event, the point-of-use confirmation flag of the playing control meta file 41 is turned off (described later with reference to Fig. 36), processing to obtain user approval is not executed, and the license is obtained.

Further as time passes and the playable period ends, the playing operation (specifically, the operation as to the "view/listen" button in D in Fig. 33) cannot be performed as to the content, and instead an operation as to the "extend viewing/listening" button can be performed. Upon the "extend viewing/listening" button being performed, the AV player 15 is started by the ECG 14, and whether or not there are any additional playing licenses is confirmed as to the DRM client 16 from the AV player 15. In this case, only the playing license is held for which the playable period has already passed, and an additional playing license is not held, whereby the DRM client 16 requests the DRM server 26 for an additional playing license for a license ID described in the playing control meta file 41. However, the point-of-use confirmation flag corresponding to the additional playing license of the playing control meta file 41 is turned on (described later with reference to Fig. 36), whereby approval to generate billing has to be obtained from the user prior to this request. Upon the approval being obtained from the user, the DRM client 16 then requests the additional playing license from the DRM server 26.

Corresponding to this request, upon confirming the client information of the client managing server 22 the DRM server 26 supplies the additional playing license to the DRM client 16. At this stage billing for the additional playing license obtaining is performed by the billing/settlement server 23.

With the receiving device 10, the content key Kc is extracted from the additional playing license by the DRM client 16 and supplied to the AV player 15, and the playing (decryption of the encryption and decryption of the encoding) of the content is performed by the AV player 15.

Fig. 35 shows a description example of the download control meta file 31 corresponding to the pattern e operating mode. A feature of the download control meta file 31 corresponding to the pattern e operating mode is the point that the ID of the playing license, which is a true license, is described in the license ID item.

Fig. 36 shows a description example of the playing control meta file 41 corresponding to the pattern e operating mode. A feature of the playing control meta file 41 corresponding to the pattern e operating mode is in that, with one license of the two types of licenses, normal playing is described in the license type item, and that an ID of the playing license which is a true license, which is the same license ID as described in the license ID item of the download control meta file 31, is described in the license ID item, and that the point-of-use confirmation flag is turned off. Also, a point is that, of the two types of licenses, for the other license, additional playing is described in the license type item, and that an ID of the additional playing license which is a true license, which is different from the license ID as described in the license ID item of the download control meta file 31, is described in the license ID item, and that the point-of-use confirmation flag is turned on.

The pattern f operating mode is a service to allow the content to be copied to a DVD one time only, after the content has been test-viewed/listened to for free for a short time such as 10 minutes or so, and billing is performed when the copy is made.

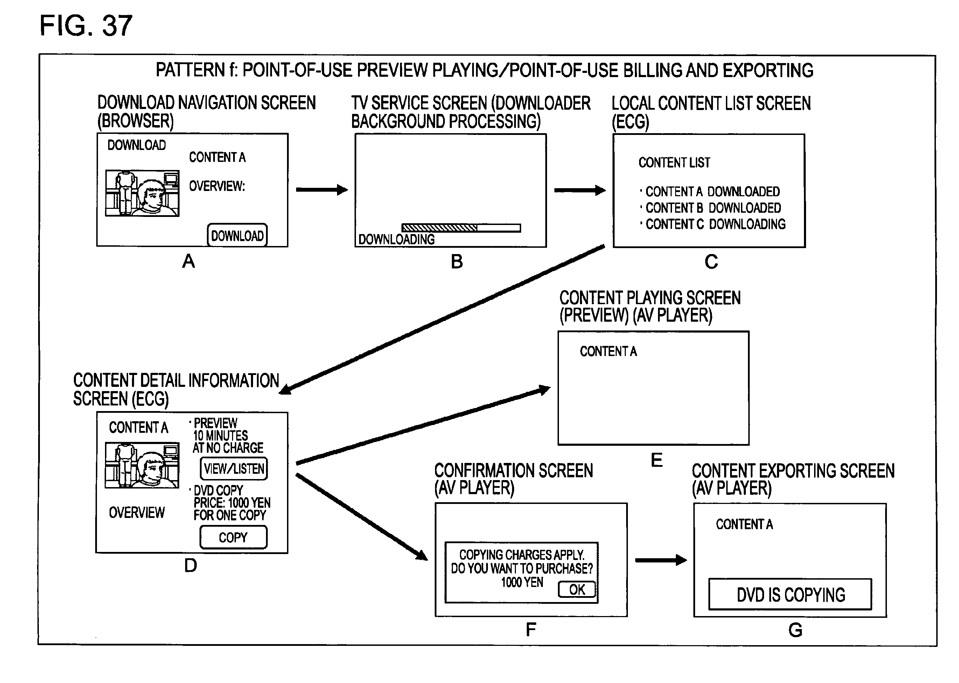

Fig. 37 shows the transition of screens presented to the user, corresponding to a pattern f operating mode. First, a download navigation screen is displayed by the browser 11, and the user selects content A to download on the download navigation screen, whereby, as shown in A in the drawing, a confirmation screen made up of a reduced-size image corresponding to the content, overview of the content, and a "DL" button is displayed, and upon the "DL" button being operated, the download starts. The screen display is then transitioned to that which shows that the download is in process, as shown in B in the drawing.

After completing the download of content A, upon the user performing predetermined operations, a local content list such as shown in C in the drawing is displayed by the ECG 14. Upon the content A being selected from the local content list, a content detail information screen made up of the overview description of content A, reduced-size image, and further information relating to a preview playing license "preview 10 minutes free" and "view/listen" button, and information relating to the exporting license "DVD copy 1000 yen each copy", and "copy" button such as shown in D in the drawing are displayed. Note that the "view/listen" button instructing preview viewing/listening is only operable one time.

Upon the "view/listen" button being operated on the content detail information screen, as shown in E in the drawing, playing of the content A by the AV player 15 is started only the allowed amount of time (in this case, 10 minutes). Also, upon the "copy" button being operated, the screen is transitioned to a confirmation screen in order to obtain approval for billing from the user, as shown in F in the drawing, and only in the case that the "OK" button is operated is the exporting license obtained, and as shown in G in the drawing, the exporting of the content A is started by the AV player 15 and external output unit 17.

Note that the various types of information in A in the drawing, D in the drawing, and F in the drawing are displayed based on the description content of the playing control meta file 41.

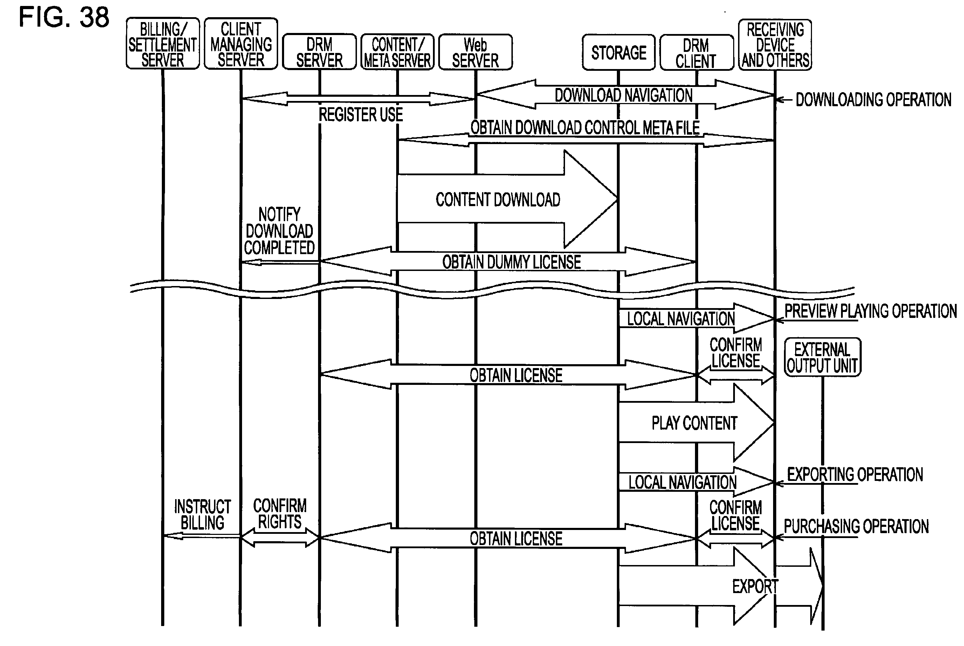

Fig. 38 shows a processing sequence corresponding to the pattern f operating mode. In pattern f, upon the selection of content by the user in the download navigation page displayed by the browser 11 and a download operation (specifically, operation as to the "DL" button in A in Fig. 37) having been performed, a use registration is notified to the client managing server 22, the download control meta file 31 is obtained by the downloader 12, and the content is downloaded according to the download control meta file 31. In response to the content download having completed, a license is requested from the DRM client 16 as to the DRM server 26, and a dummy license is supplied from the DRM server 26 to the DRM client 16. At this stage, the client managing server 22 can comprehend that the receiving device 10 has already downloaded the content, so hereafter, the information of the completed download is reflected in the download navigation page.

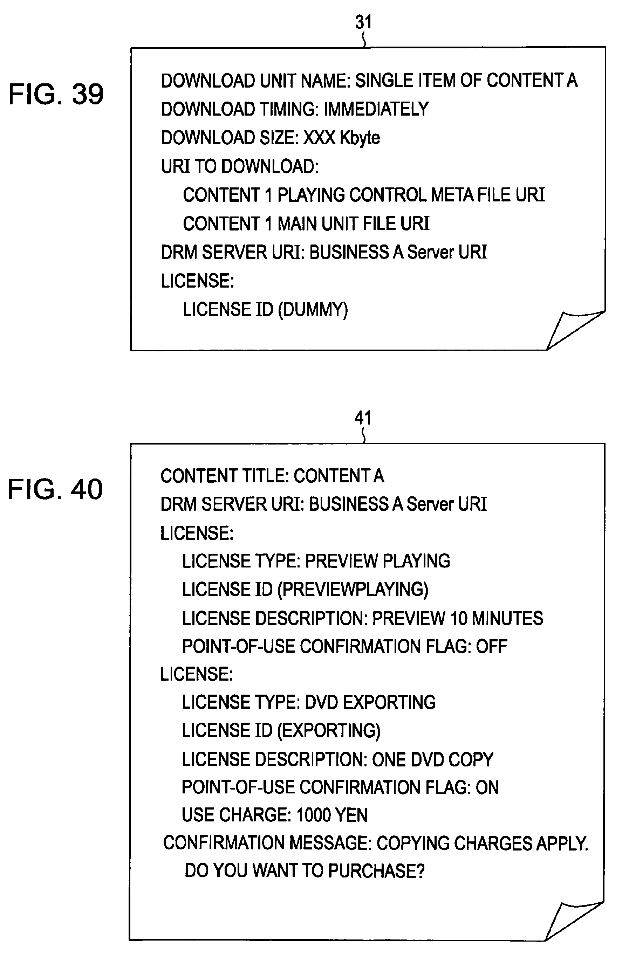

Subsequently, upon a preview operation (specifically an operation as to the "view/listen" button in D in Fig. 37) being performed as to the already-downloaded content within the playable period, the AV player 15 is started by the ECG 14, and whether or not there are any preview playing licenses is confirmed as to the DRM client 16 from the AV player 15. In this case, only the dummy license is held, and the preview playing license is not held, whereby the DRM client 16 requests the preview playing license of the license ID described in the playing control meta file 41 as to the DRM server 26. In this event, the point-of-use confirmation flag of the playing control meta file 41 is turned off (described later with reference to Fig. 40), processing to obtain user approval is not executed, and the license is obtained.

The content key Kc is extracted from the preview playing license by the DRM client 16 and supplied to the AV player 15, and the content is played by the AV player 15 (decryption of the encryption and decryption of the encoding). Note that the preview playing license can only be used one time.

Also, the DRM server 26 is arranged so as to not supply the preview playing license two or more times.

Upon an exporting operation (specifically an operation as to the "copy" button in D in Fig. 37) being performed as to the already-downloaded content, the AV player 15 is started by the ECG 14, and whether or not there are any exporting licenses is confirmed as to the DRM client 16 from the AV player 15. In this case, the exporting license is not held, whereby the DRM client 16 requests the exporting license of the license ID described in the playing control meta file 41 as to the DRM server 26. However, the point-of-use confirmation flag of the playing control meta file 41 is turned on (described later with reference to Fig. 40), whereby approval to generate billing has to be obtained from the user prior to this request. Upon the approval being obtained from the user, the DRM client 16 then requests the exporting license from the DRM server 26.

Corresponding to this request, upon confirming the client information of the client managing server 22, the DRM server 26 supplies the exporting license to the DRM client 16. At this stage, the client managing server 22 can comprehend that the receiving device 10 has already downloaded and will use the content, whereby billing is performed by the billing/settlement server 23.

With the receiving device 10, the content key Kc is extracted from the exporting license by the DRM client 16 and supplied to the AV player 15, the encryption of the content is decrypted by the AV player 15, the encoded data obtained as a result thereof is supplied to the external output unit 17, the encoding method is changed as appropriate and encrypted again, and output to an output destination (DVD recorder or the like).

Fig. 39 shows a description example of the download control meta file 31 corresponding to the pattern f operating mode. A feature of the download control meta file 31 corresponding to the pattern f operating mode is the point that the ID of the dummy license is described in the license ID item.

Fig. 40 shows a description example of the playing control meta file 41 corresponding to the pattern f operating mode. A feature of the playing control meta file 41 corresponding to the pattern f operating mode a point in that two types of licenses are described. Of the two types of licenses, for one of the licenses, features are that preview playing is described in the license type item, that an ID of the preview playing license which is a true license, which is different from the license ID as described in the license ID item of the download control meta file 31, is described in the license ID item, and that the point-of-use confirmation flag is turned off. Also, a point is in that of the two types of licenses, for the other license, DVD exporting is described in the license type item, that an ID of the exporting license which is a true license, which is different from the license ID as described in the license ID item of the download control meta file 31, is described in the license ID item, and that the point-of-use confirmation flag is turned on.

The pattern g operating mode is a service that enables progressive download playing of content (playing is started without waiting for the download to be completed) and for normal playing after the download is completed (rental viewing/listening), and each is billed at time of use. Note that the billing amounts may differ for progressive download playing and for the normal playing after the download is completed, and the progressive download playing may have a slight risk of communication obstruction or playing only one time or the like, so the billing amount is set to be cheaper than the normal playing.

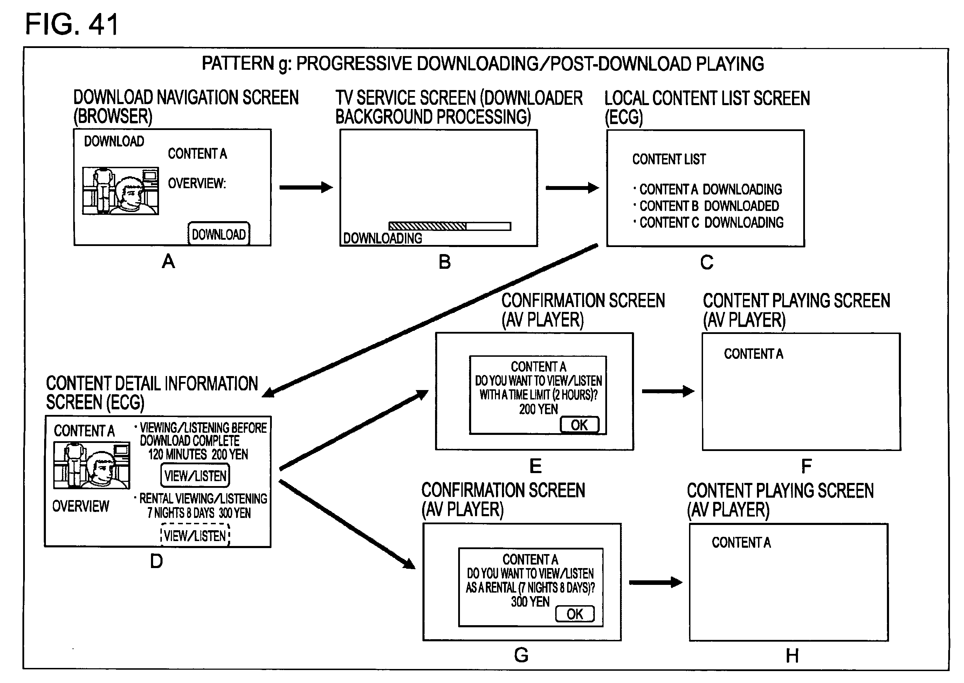

Fig. 41 shows the transition of screens presented to the user, corresponding to a pattern g operating mode. First, a download navigation screen is displayed by the browser 11, and the user selects content A to download on the download navigation screen, whereby, as shown in A in the drawing, a confirmation screen made up of a reduced-size image corresponding to the content, overview of the content, and a "DL" button is displayed, and upon the "DL" button being operated on the confirmation screen, the download starts. The screen display is then transitioned to that which shows that the download is in process, as shown in B in the drawing.

Upon the user performing predetermined operations during the download of content A, a local content list such as shown in C in the drawing is displayed by the ECG 14. Upon the content A being selected from the local content list, a content detail information screen made up of the overview description of content A, reduced-size image, in addition to information relating to progressive download playing of "pre-download completion view/listen 120 minutes 200 yen" and a "view/listen" button, information relating to normal playing of "rental view/listen 7 nights 8 days 300 yen" and a "view/listen" button, such as shown in D in the drawing, are displayed. Note that whether or not progressive download playing can be performed is determined by the ECG 14 based on whether or not there are corresponding licenses, the data size of content A, the already-transferred data amount, data communication speed and so forth, and when in a state that the progressive download playing can be performed, the "view/listen" button which instructs the progressive download playing becomes operable. At this time, the "view/listen" button that instructs normal playing is inoperable. Upon the content A download having completed, the "view/listen" button which instructs the progressive download playing then becomes inoperable, and the "view/listen" button that instructs normal playing becomes operable.

Note that on the supplying device 20 side, only the progressive downloading license is supplied during the content download, and the playing license is not supplied. Conversely, after completing the content download, the progressive downloading license is not supplied, and the playing license is supplied.

Upon the "view/listen" button being operated which instructs progressive download playing on the content detail information screen during the download of the content A, the screen is transitioned to a confirmation screen to obtain approval for billing from the user, as shown in E in the drawing, and upon the "OK" button on the confirmation screen being operated, the playing of content A is started, as shown in F in the drawing.

Also, upon operation of the "view/listen" button that instructs normal playing on the content detail information screen after the download of content A has been completed, the screen is transitioned to a confirmation screen to obtain approval for billing from the user, as shown in the drawing G, and upon the "OK" button on the confirmation screen being operated, the playing of content A is started, as shown in H in the drawing.

The various types of information in 41A in the drawing, D in the drawing, E in the drawing, and G in the drawing are based on the description content of the playing control meta file 41.

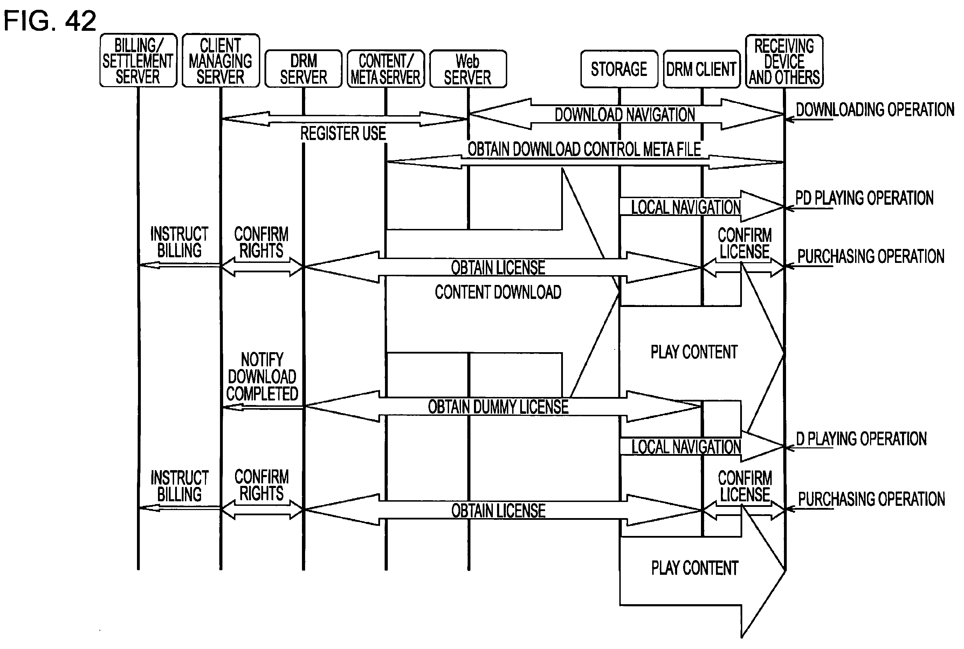

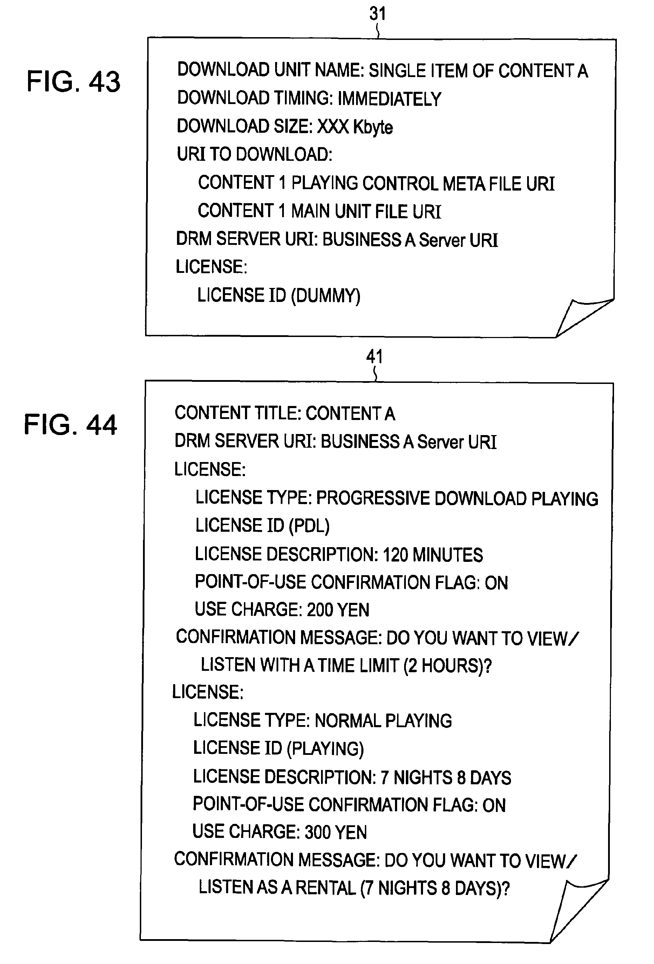

Fig. 42 shows a processing sequence corresponding to the pattern g operating mode. In pattern g, upon the selection of content by the user in the download navigation page displayed by the browser 11 and a download operation (specifically, operation as to the "DL" button in A in Fig. 41) having been performed, a use registration is notified to the client managing server 22, the download control meta file 31 is obtained by the downloader 12, and the content is downloaded according to the download control meta file 31. Upon a progressive download playing operation having been performed (specifically, an operation as to the "view/listen" button that instructs the progressive download playing in D in Fig. 41) during the download of the content, the AV playing 15 is started by the ECG 14, and whether or not there is a progressive download license is confirmed from the AV player 15 to the DRM client 16. In this case, neither license is held, whereby the DRM client 16 requests a progressive download license for a license ID described in the playing control meta file 41 to the DRM server 26. In this event, the point-of-use confirmation flag corresponding to the progressive download license of the playing control meta file 41 is turned on (described later with reference to Fig. 44), whereby approval to generate billing has to be obtained from the user prior to this request.
Upon the approval being obtained from the user, the DRM client 16 then requests the progressive download license from the DRM server 26.

Corresponding to this request, upon confirming the client information of the client managing server 22 the DRM server 26 supplies the progressive download license to the DRM client 16. At this stage, the client managing server 22 can comprehend use of the content (progressive download playing) by the receiving device 10, whereby billing is performed by the billing/settlement server 23.

With the receiving device 10, the content key Kc is extracted from the progressive download license by the DRM client 16 and supplied to the AV player 15, and the playing (decryption of the encryption and decryption of the encoding) of the content is performed by the AV player 15.

In response to the content download having completed, a license is requested from the DRM client 16 to the DRM server 26, and a dummy license is supplied from the DRM server 26 to the DRM client 16. At this stage, the client managing server 22 can comprehend that the receiving device 10 has already downloaded the content, whereby, hereafter the information of the completed download is reflected in the download navigation page.

Subsequently, upon a playing operation (specifically an operation as to the "view/listen" button in D in Fig. 41 to instruct normal playing) being performed as to the already-downloaded content, the AV player 15 is started by the ECG 14, and whether or not there are any playing licenses is confirmed as to the DRM client 16 from the AV player 15. In this case, only a dummy license and progressive download license are held and a playing license is not held, whereby the DRM client 16 is to request a playing license with the license ID described in the playing control meta file 41 from the DRM server 26. However, the point-of-use confirmation flag of the playing control meta file 41 is turned on (described later with reference to Fig. 44), whereby approval to generate billing has to be obtained from the user prior to this request. Upon the approval being obtained from the user, the DRM client 16 then requests the playing license from the DRM server 26.

Corresponding to this request, upon confirming the client information of the client managing server 22, the DRM server 26 supplies the playing license to the DRM client 16. At this stage, the client managing server 22 can comprehend that the receiving device 10 has already downloaded and will use the content, whereby billing is performed by the billing/settlement server 23.

With the receiving device 10, the content key Kc is extracted from the playing license by the DRM client 16 and supplied to the AV player 15, and playing of the content (decryption of the encryption and decryption of the encoding) is performed by the AV player 15.

Fig. 43 shows a description example of the download control meta file 31 corresponding to the pattern g operating mode. A feature of the download control meta file 31 corresponding to the pattern g operating mode is the point that the ID of the dummy license is described in the license ID item.

Fig. 44 shows a description example of the playing control meta file 41 corresponding to the pattern g operating mode. A feature of the playing control meta file 41 corresponding to the pattern g operating mode is in the point that two types of licenses are described. A point is that, of the two types of licenses, for one of the licenses, progressive download playing is described in the license type item, that an ID of the progressive download license which is a true license, which is different from the license ID as described in the license ID item of the download control meta file 31, is described in the license ID item, and that the point-of-use confirmation flag is turned on. Also, a point is that, of the two types of licenses, for the other license, normal playing is described in the license type item, that an ID of the playing license which is a true license, which is different from the license ID as described in the license ID item of the download control meta file 31, is described in the license ID item, and that the point-of-use confirmation flag is turned on.

This concludes the description of each of the operating modes of patterns a through g.

As described above, according to the content download system 1 to which the present invention is applied, basic operations of the receiving device 10 remain common, and can handle various operating modes such as the above-described patterns a through g.

The present invention can be applied to various content download services, not only video content, but music, text, computer programs, and so forth.

Now, the above-described series of processing can be executed with hardware, or can be executed with software. In the case of executing the series of processing with software, a program making up the software is installed from a program recording medium to a computer with dedicated hardware built in, or to a general-use personal computer or the like, for example, wherein various types of functions can be executed by installing various types of programs.

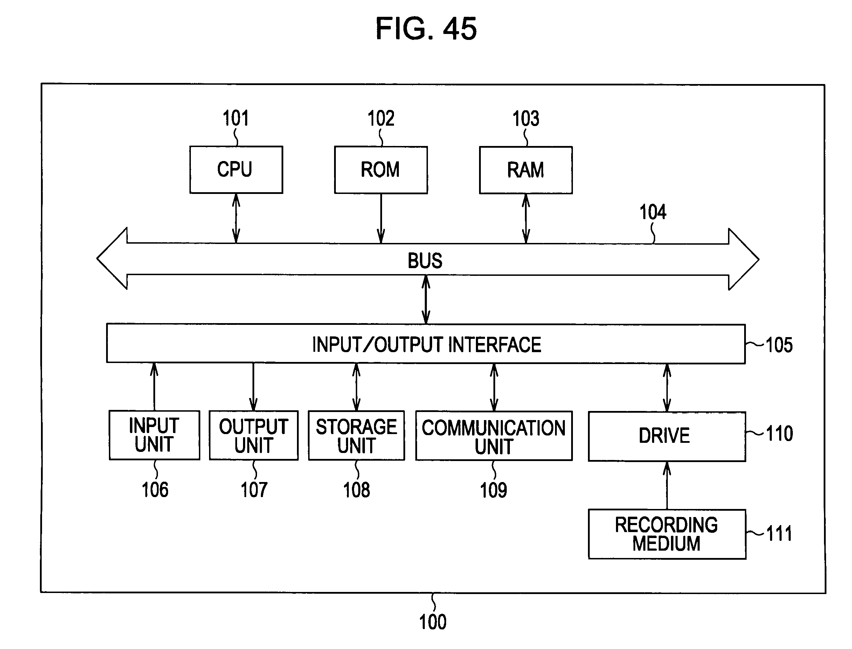

Fig. 45 is a block drawing showing a configuration example of the hardware of the compute to execute the above-described series of processing with a program.

With a computer 100, a CPU (Central Processing Unit) 101, ROM (Read Only Memory) 102, RAM (Random Access Memory) 103 are mutually connected with a bus 104.

An input/output interface 105 is further connected to the bus 104. The input/output interface 105 is connected to an input unit 106 made up of a keyboard, mouse, microphone and so forth, an output unit 107 made up of a display, speaker, and so forth, a storage unit 108 made up of a hard disk, non-volatile memory or the like, a communication unit 109 made up of a network interface or the like, and a drive 110 to drive a removable media 111 such as a magnetic disk, optical disk, magneto-optical disk, or semiconductor memory.

With the computer 100 thus configured, for example the CPU 101 executes the program stored in the storage unit 108 by loading in the RAM 103 via the input/output interface 105 and bus 104, thereby performing the above-described series of processing.

Note that the program that the computer 100 executes may be a program wherein processing is performed in a time-series manner along the sequence described in the present Specification, or may be a program wherein processing is performed in parallel, or at necessary timings as called up or the like.

Also, the program may be processed with one computer, or may be dispersed and processed with multiple computers. Further, the program may be transferred to a remote computer and executed.

Also, within the present Specification, the term "system" represents the entirety of devices made up of multiple devices.

Note that the embodiments of the present invention are not restricted to the above-described embodiments; rather, various types of changes can be made without departing from the essence of the present invention.

## Claims

1. A content download system comprising:
a content supplying device to supply content; and
a content receiving device to receiving content from said content supplying device via a network;
said content receiving device including
operating input means to input user operations;
download means to download encrypted content and playing control data necessary for playing said content from said content supplying device, corresponding to said user operations;
obtaining means to confirm the existence of a license that includes a key for decrypting said encrypted content based on said playing control data when playing said downloaded content, and to obtain said license corresponding to the confirmation results; and
playing means to play said encrypted content using said obtained license; and
said content supplying device including
control data supplying means to supply said playing control data necessary for playing already-downloaded content in response to a request from said content receiving device;
content supplying means to supply said encrypted content in response to a request from said content receiving device; and
license supplying means to supply said license including a key for decrypting said encrypted content in response to a request from said content receiving device based on said playing control data;
wherein at least one set or more of license information including unique identifying information of license, type information of license, and presenting information to present to the user relating to the license, is described in said playing control data.

2. A content download method for a content download system including a content supplying device to supply content, and a content receiving device to receive content from said content supplying device via a network; including the steps of:
with said content receiving device,
inputting user operations,
requesting encrypted content and playing control data necessary for playing said content from said content supplying device, corresponding to said user operations;
and with said content supplying device,
supplying said encrypted content and said playing control data in response to requests from said content receiving device;
and with said content receiving device,
when playing said downloaded content, confirming the existence of a license that includes a key for decrypting said encrypted content based on said playing control data, and requesting said license to said content supplying device corresponding to the confirmation results;
and with said content supplying device,
supplying said license to said content supplying device in response to the request from said content receiving device based on said playing control data;
and with said content receiving device,
playing said encrypted content using said obtained license; and
wherein at least one set or more of license information including unique identifying information of license, type information of license, and presenting information to present to the user relating to the license, is described in said playing control data.

3. A content supplying device configured to supply content to a content receiving device connected via a network, comprising:
control data supplying means to supply, to said content receiving device, playing control data necessary for playing the content downloaded by said content receiving device;
content supplying means to supply the encrypted content in response to requests from said content receiving device;
license supplying means to supply said license that includes a key for decrypting said encrypted content in response to the request from said content receiving device based on said playing control data;
wherein at least one set or more of license information including unique identifying information of license, type information of license, and presenting information to present to the user relating to the license, is described in said playing control data.

4. The content supplying device according to Claim 3, wherein in said license type information is described at least one of:
normal playing which indicates that license has a restriction applied to the playable period of said content; additional playing which indicates that the license has an extended playable period after the playable period corresponding to said normal playing has ended; preview playing which indicates that the license is for test viewing/listening; progressive download playing which indicates that the license is such that the content can be played while downloading; and exporting which indicates that the license allows said content to be output and
recorded from said content receiving device to an external device.

5. The content supplying device according to Claim 4, wherein said license supplying means supplies said additional playing license after the playable period corresponding to said normal playing license has ended, in response to the request from said content receiving device based on said playing control data.

6. The content supplying device according to Claim 3, wherein said license supplying means supplies said preview playing license as to the same content only one time, in response to the request from said content receiving device based on said playing control data.

7. The content supplying device according to Claim 3, wherein said license supplying means supplies a license for said progressive download playing only during the content download, in response to the request from said content receiving device based on said playing control data.

8. The content supplying device according to Claim 3, wherein at least one set or more of license information including unique identifying information of license, type information of license, approval information indicating whether or not approval will be obtained from the user of the content receiving device at time of obtaining license, and presenting information to present to the user relating to the license, is described in said playing control data.

9. A content supplying method for a content supplying device configured to supply content to a content receiving device that is connected via a network, including the steps of:
supplying playing control data necessary for playing the content downloaded by said content receiving device to said content receiving device;
supplying encrypted content in response to the request from said content receiving device; and
supplying said license which includes a key for decrypting encrypted content in response to the request from said content receiving device based on said playing control data;
wherein at least one set or more of license information including unique identifying information of license, type information of license, and presenting information to present to the user relating to the license, is described in said playing control data.

10. A program to cause a computer to execute processing to control a content supplying device to supply content to a content receiving device that is connected via a network, including the steps of:
supplying playing control data necessary for playing the content downloaded by said content receiving device to said content receiving device;
supplying encrypted content in response to the request from said content receiving device; and
supplying said license which includes a key for decrypting said encrypted content in response to the request from said content receiving device based on said playing control data;
wherein at least one set or more of license information including unique identifying information of license, type information of license, and presenting information to present to the user relating to the license, is described in said playing control data.

11. A content receiving device configured to receive content from a content supplying device connected via a network, comprising:
operating input means configured to input user operations;
download means configured to download, from said content supplying device, encrypted content and playing control data necessary for playing said content, corresponding to said user operations;
obtaining means configured to confirm the existence of a license that includes a key for decrypting said encrypted content based on said playing control data when playing said downloaded content, and to obtain said license corresponding to the confirmation results; and
playing means to play said encrypted content using said obtained license;
wherein at least one set or more of license information including unique identifying information of license, type information of license, and presenting information to present to the user relating to the license, is described in said playing control data.

12. The content receiving device according to Claim 11, further including:
output means configured to output said content wherein encryption has been decrypted by said playing means to said external device, having performed the processing of at least one of encoding method changing processing or re-encrypting processing.

13. The content receiving device according to Claim 12, wherein in said license type information is described at least one of
normal playing which indicates that license has a restriction applied to the playable period of said content;
additional playing which indicates that the license has an extended playable period after the playable period corresponding to said normal playing has ended;
preview playing which indicates that the license is for test viewing/listening;
progressive download playing which indicates that the license is such that the content can be played while downloading; and
exporting which indicates that the license allows said content to be output and recorded from said content receiving device to an external device.

14. The content receiving device according to Claim 13, wherein said operating input means accepts the operation of a user who approves obtaining said additional playing license after the playable period corresponding to said normal playing license has ended.

15. The content receiving device according to Claim 13, wherein said operating input means accepts the operation of a user who instructs obtaining said additional playing license after the playable period corresponding to said normal playing license has ended.

16. The content receiving device according to Claim 13, wherein said operating input means accepts the operation of a user only one time that instructs obtaining said preview playing license as to the same content, in response to requests from said playing means based on said playing control data.

17. The content receiving device according to Claim 13, wherein said operating input means accepts the operation of a user that instructs obtaining said progressive download playing license, only during the content download, in response to requests from said playing means based on said playing control data.

18. The content receiving device according to Claim 11, wherein at least one set or more of license information including unique identifying information of license, type information of license, approval information indicating whether or not approval will be obtained from the user of the content receiving device at time of obtaining license, and presenting information to present to the user relating to the license, is described in said playing control data;
said content receiving device further comprising confirming means for conforming approval of obtaining said license by the user, following said approval information.

19. The content receiving device according to Claim 18, wherein
in the case that user approval is obtained by said confirming means,
said obtaining means obtains said license; and
in the case that user approval is not obtained by said confirming means,
said playing means notifies the user that the content cannot be played.

20. A content receiving method of a content receiving device configured to receive content from a content supplying device connected via a network, including the steps of:
inputting user operations;
downloading encrypted content and playing control data necessary for playing said content from said content supplying device, corresponding to said user operations;
when playing said downloaded content, confirming the existence of a license that includes a key for decrypting said encrypted content based on said playing control data, and obtaining said license corresponding to the confirmation results; and
playing said encrypted content using said obtained license;
wherein at least one set or more of license information including unique identifying information of license, type information of license, and presenting information to present to the user relating to the license, is described in said playing control data.

21. A program to cause a computer to execute processing, which program is to control a content receiving device configured to receive content from a content supplying device that is connected via a network, including the steps of:
inputting user operations;
downloading encrypted content and playing control data necessary for playing said content from said content supplying device, corresponding to said user operations;
when playing said downloaded content, confirming the existence of a license that includes a key for decrypting said encrypted content based on said playing control data, and obtaining said license corresponding to the confirmation results; and
playing said encrypted content using said obtained license;
wherein at least one set or more of license information including unique identifying information of license, type information of license, and presenting information to present to the user relating to the license, is described in said playing control data.
